# EUROPEAN PATENT APPLICATION

(11) **EP 4 831 248 A1**
(43) Date of publication of application: **28.10.2026**
(21) Application number: 24907153.1
(22) Date of filing: 04.12.2024
(51) Int. Cl.: C09D 4/02, B32B 27/30, C09D 7/48, C09D 7/63, C09J 7/29

(54) **COATING AGENT, LAYERED PRODUCT, AND ARTICLE HAVING LAYERED PRODUCT**

(30) Priority: 20.12.2023 JP 2023214349
(71) Applicant: JNC Corporation, Chiyoda-ku Tokyo 100-8105 (JP)
(72) Inventor: KONDO Kyoko, Ichihara-shi, Chiba 290-8551 (JP); SHIKAMA Keiko, Ichihara-shi, Chiba 290-8551 (JP); YODA Akiko, Ichihara-shi, Chiba 290-8551 (JP); ITO Kenya, Ichihara-shi, Chiba 290-8551 (JP); KAGEYAMA Akiko, Ichihara-shi, Chiba 290-8551 (JP)
(74) Representative: Becker, Eberhard
(86) International application number: PCT/JP2024/042801
(87) International publication number: WO 2025/134766

(57) **Abstract**

The purpose of the present invention is to obtain a layered product having excellent weathering resistance. This coating agent contains: a dimer acid di(meth)acrylate-based resin; a polyfunctional (meth)acrylate-based compound; a photopolymerization initiator; and a photostabilizer represented by formula (1). **In** addition, this layered product comprises: a coating layer formed on a substrate layer using the coating agent; a substrate layer formed using a thermoplastic polyurethane; and, on the opposite side of the substrate layer from the side on which the coating layer is formed, an adhesive layer formed using at least one resin selected from among an acrylic-based resin, a urethane-based resin, a rubber-based resin and a silicone-based resin.

## Description

### Technical Field

The present invention relates to a coating agent used for surface protection and surface design modification of articles mainly used outdoors, and to a laminate obtained using the coating agent.

### Related Art

Articles used outdoors may be exposed to ultraviolet rays or wind and rain, and may deteriorate or be damaged. Thus, films used for surface protection of such articles are required to have extremely stringent weather resistance. For example, in cases where a protective film is attached to an automobile body or headlight, the protective film itself is required to maintain transparency over a long period from the viewpoint of visibility and safety during light irradiation.

To address these issues, there has been disclosed a protective film that, by being attached, can be easily recovered in transparency of plastic whose transparency has decreased due to aging deterioration, weathering deterioration, and the like (see, for example, Patent Document 1).

However, even if the above protective film is used, there is a problem in that the film surface may undergo deterioration, resulting in a decrease in glossiness, color tone, transparency, and the like.

### Prior Art Documents

### Patent Documents

Patent Document 1: WO 2017/047600

### SUMMARY OF INVENTION

### Technical Problem

In view of the above, the present invention aims to obtain a laminate such as a protective film having excellent weather resistance.

### Solution to Problem

The inventors of the present invention conducted extensive studies to address the above problems. As a result, the inventors found that, by using a di(meth)acrylate (DDDA) having a dimer acid skeleton with high hydrophobicity and a polyfunctional (meth)acrylate as resin components of a coating agent, and adding a photostabilizer having a specific structure to the coating agent, it is possible to maintain the color tone and transparency of a laminate even after exposure to ultraviolet rays or wind and rain, that is, it is possible to obtain a coating agent that provides a laminate having excellent weather resistance. Thereby, the present invention has been completed.

A coating agent according to a first aspect of the present invention contains a dimer acid di(meth)acrylate-based resin, polyfunctional (meth)acrylate-based compounds, a photopolymerization initiator, and a photostabilizer represented by formula (1). 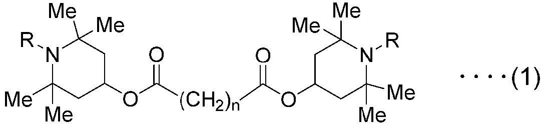 (In formula (1), n is an integer of 4 to 12, R is each independently an alkyl having 1 to 5 carbon atoms or an alkoxy having 4 to 10 carbon atoms, and Me is methyl.

In a coating agent according to a second aspect of the present invention, the coating agent according to the first aspect of the present invention described above further contains an ultraviolet absorber.

In a coating agent according to a third aspect of the present invention, in the coating agent according to the first or second aspect of the present invention described above, the polyfunctional (meth)acrylate-based compounds are trifunctional acrylate-based compounds.

A laminate 10 according to a fourth aspect of the present invention includes a coating layer and a substrate layer, the coating layer being composed of a cured product of a coating agent formed on a substrate layer using the coating agent according to any one of the first to third aspects of the present invention described above. With such a configuration, the laminate is significantly improved in weather resistance.

In the present specification, "on a surface side" means that layers may be laminated in contact with each other, or may be laminated via another layer. "On a surface" means that layers are laminated in contact with each other.

A laminate 10 according to a fifth aspect of the present invention includes a coating layer and a substrate layer, the coating layer being composed of a cured product of a coating agent formed on a substrate layer using the coating agent according to any one of the first to third aspects of the present invention described above, the substrate layer being formed using thermoplastic polyurethane.

A laminate 10 according to a sixth aspect of the present invention includes a coating layer, a substrate layer, and an adhesive layer, the coating layer being composed of a cured product of a coating agent formed on a substrate layer using the coating agent according to any one of the first to third aspects of the present invention described above, the substrate layer being formed using thermoplastic polyurethane, the adhesive layer being formed using at least one resin selected from acrylic-based resin, urethane-based resin, rubber-based resin, and silicone-based resin on a surface side of the substrate layer opposite to a surface side on which the coating layer is formed.

In a laminate 10 according to a seventh aspect of the present invention, the coating agent according to any one of the fourth to sixth aspects of the present invention described above further contains at least one reactive silicone compound selected from siloxanes having an acryloyl group at both terminals or one terminal.

In a laminate 10 according to an eighth aspect of the present invention, the coating agent according to any one of the fourth to seventh aspects of the present invention described above further contains at least one fluorine compound selected from a group consisting of a fluorosilsesquioxane monomer and a fluorosilsesquioxane polymer.

In a laminate 10 according to a ninth aspect of the present invention, the fluorosilsesquioxane polymer according to the eighth aspect of the present invention described above is an addition polymer of a fluorosilsesquioxane monomer having at least one addition polymerizable functional group, or an addition copolymer of a fluorosilsesquioxane monomer having one addition polymerizable functional group and an addition polymerizable monomer.

An article according to a tenth aspect of the present invention is an article in which the laminate 10 according to any one of the sixth to ninth aspects of the present invention described above is attached to a surface via the adhesive layer.

### Effects of Invention

By using the coating agent of the present invention on a surface of the substrate layer and forming a coating layer functioning as a protective layer, a laminate can be obtained that does not develop appearance defects such as cracks even if exposed to ultraviolet rays or wind and rain, and that exhibits excellent weather resistance.

The laminate of the present invention has excellent weather resistance due to the coating layer. Furthermore, by attaching the laminate of the present invention to a surface of an article such as an adherend (attachment object), the surface of these articles can be protected.

### BRIEF DESCRIPTION OF THE DRAWINGS

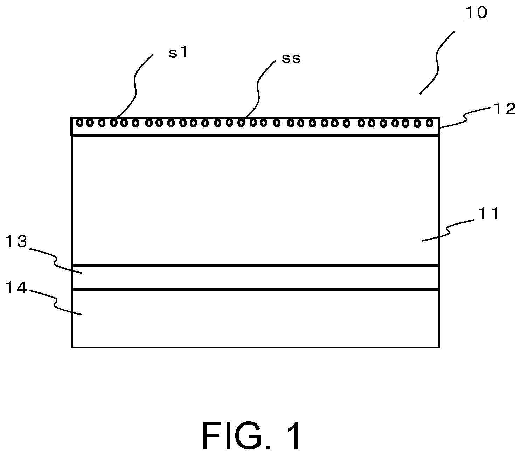

[FIG. 1] FIG. 1 is a diagram schematically illustrating a layer configuration of a laminate 10 according to a second embodiment of the present invention.

### DESCRIPTION OF THE EMBODIMENTS

Embodiments of the present invention are described below with reference to the drawings. In the drawings, portions that are identical or equivalent to each other are denoted by identical or similar reference numerals, and duplicate descriptions are omitted. The present invention is not limited to the following embodiments.

### [Coating Agent]

A coating agent according to a first embodiment of the present invention contains a dimer acid di(meth)acrylate-based resin, polyfunctional (meth)acrylate-based compounds, a photopolymerization initiator, and a photostabilizer represented by formula (1). For example, as shown in FIG. 1, by applying the coating agent onto a substrate layer 11 and curing the coating agent, a coating layer 12 having excellent acid resistance and stretchability can be formed, and a laminate having excellent weather resistance can be obtained. The coating agent may further contain an ultraviolet absorber, and may contain a fluorine compound and a reactive silicone compound as antifouling agents. From the viewpoint of further improving the weather resistance, the coating agent preferably contains the ultraviolet absorber. From the viewpoint of being capable of improving the antifouling properties of the coating layer 12 and imparting excellent slipperiness, the coating agent preferably contains an antifouling agent. The coating agent may further contain a solvent and an additive. Among the components contained in the coating agent, the dimer acid di(meth)acrylate-based resin, the polyfunctional (meth)acrylate-based compounds, and the photopolymerization initiator may be referred to as curable components.

### [Laminate 10]

The laminate 10 according to a second embodiment of the present invention includes, as shown in FIG. 1, the substrate layer 11 provided with the coating layer 12, and an adhesive layer 13. The laminate 10 preferably includes a release film 14 during manufacturing; however, the release film 14 is peeled off before the laminate 10 is attached to a surface of an adherend.

### [Coating Layer 12]

The coating layer 12 is formed by applying, onto a surface of the substrate layer 11, a coating agent that contains a dimer acid di(meth)acrylate-based resin, polyfunctional (meth)acrylate-based compounds, a photopolymerization initiator, and a photostabilizer represented by formula (1), and optionally contains an ultraviolet absorber or an antifouling agent such as a reactive silicone compound and a fluorine compound, followed by drying and curing. In the case where the reactive silicone compound and the fluorine compound are contained, silicone and fluorine contained in the reactive silicone compound and the fluorine compound accumulate at an interface with air in the coating layer 12. The coating layer 12 has a film thickness of typically 0.5 to 100 µm, preferably 0.5 to 50 µm, more preferably 0.5 to 30 µm, and particularly preferably 1 to 5 µm. If the film thickness of the coating layer 12 is 0.5 µm or more, sufficient acid resistance performance is provided; if the film thickness is 100 µm or less, the laminate is prevented from having an excessively large thickness and has sufficient stretching performance.

### [Coating Method of Coating Agent]

For coating, a wet coating method that uniformly applies a coating agent is preferably used. As the wet coating method, a gravure coating method, a die coating method, or the like can be used.

The gravure coating method is a method in which a gravure roll on which surface uneven engraving processing has been applied is immersed in a coating liquid, a coating agent adhering to uneven parts on the surface of the gravure roll is scraped off by a doctor blade, and the liquid is stored in recesses, thereby performing accurate metering, and transferring the liquid to a substrate layer. The gravure coating method enables thin coating of a low-viscosity liquid. The die coating method is a method in which coating is performed while a liquid is pressurized and extruded from a coating head called a die. The die coating method enables high-precision coating. Furthermore, since the liquid is not exposed to outside air during application, changes in the concentration of the coating agent due to drying are less likely to occur.

Examples of other wet coating methods include a spin coating method, a bar coating method, a reverse coating method, a roll coating method, a slit coating method, a dipping method, a spray coating method, a kiss coating method, a reverse kiss coating method, an air knife coating method, a curtain coating method, and a rod coating method. The coating method can be selected from these methods as appropriate according to the film thickness required. Furthermore, by using the wet coating method, coating can be performed at a line speed of tens of meters per minute (for example, approximately 20 m/min), thereby enabling large-scale production and increasing production efficiency.

### [Substrate Layer 11]

As the substrate layer 11 constituting the laminate of the present invention, a film formed of a thermoplastic resin is preferably used. Examples of the thermoplastic resin include polyurethane-based resin, polyester-based resin, acetate-based resin, polyethersulfone-based resin, polycarbonate-based resin, polyamide-based resin, polyimide-based resin, polyolefin-based resin, (meth)acrylic-based resin, polyvinyl chloride-based resin, polyvinylidene chloride-based resin, polystyrene-based resin, polyvinyl alcohol-based resin, polyarylate-based resin, polyphenylene sulfide-based resin, and norbornene-based resin. Specifically, thermoplastic polyurethane, polycaprolactone (PCL), acrylic acid polymer, polyester, polyacrylonitrile, polyether ketone, polystyrene, polyvinyl acetate, or derivatives thereof are preferable. These resins may be used alone, or multiple resins may be used in combination.

The substrate layer 11 is preferably formed using thermoplastic polyurethane. Examples of the thermoplastic polyurethane include polycaprolactone-based thermoplastic polyurethane using polycaprolactone polyol as a polyhydroxy compound, polycarbonate-based thermoplastic polyurethane using polycarbonate polyol, and polyether-based thermoplastic polyurethane using polyether polyol. Among them, polycaprolactone-based thermoplastic polyurethane can be preferably used. Specific examples of trade names of thermoplastic polyurethane include: Argotec 49510 and Argotec 49510-DV, manufactured by Argotec; Esmer URS PX86, Esmer URS PX93, and Esmer URS PX98, manufactured by Nihon Matai Co., Ltd.; DUS202, DUS213, DUS235, DUS501, DUS601, DUS605, DUS614, DUS203, DUS220, DUS701, XUS2086, XUS2098, DUS451, and DUS450, manufactured by Sheedom Co., Ltd.; Unigrand XN2001, XN2002, and XN2004, manufactured by Nihon Unipolymer Co., Ltd.; N4900, manufactured by Nupro; SNY97-CLB, manufactured by Okura Industrial Co., Ltd.; and PP277+375 and PP386+375, manufactured by DingZing Advanced Materials Inc.

A film thickness of the substrate layer 11 is not particularly limited, but the film thickness of the substrate layer 11 is typically 25 to 300 µm, preferably 100 to 200 µm, and more preferably 100 to 150 µm. If the film thickness of the substrate layer 11 is 25 µm or more, the substrate layer has sufficient mechanical strength and a layer can be formed on the substrate layer. If the film thickness is 300 µm or less, the laminate is prevented from having an excessively large thickness.

### [Dimer Acid Di(meth)acrylate-based Resin]

The dimer acid di(meth)acrylate-based resin is preferably an active energy ray-curable resin having a (meth)acryloyl group and having, as a basic skeleton, a dimer acid that is a dimer of an unsaturated fatty acid having 18 carbon atoms, and examples thereof include ultraviolet curable resin. Herein, "(meth)acrylate" means acrylate or methacrylate, "(meth)acrylo" means acrylo or methacrylo, and "(meth)acryl" means acryl or methacryl. The dimer acid di(meth)acrylate-based resin can be obtained from a compound derived from dimer acid by a general ester synthesis method such as a dehydration condensation method, an acid chloride method, or a transesterification method. The dimer acid is preferably produced by dimerizing an unsaturated fatty acid having 18 carbon atoms, such as oleic acid or linoleic acid. An active energy ray-curable resin using dimer diol being a saturated alkylene diol having 36 carbon atoms obtained by reducing dimer acid can also be obtained by similar reaction or the like. A product modified with dimer diol and ethylene oxide or propylene oxide can also be used as an active energy ray-curable resin by introducing a (meth)acrylate group by a general ester synthesis method. Furthermore, dimer diamine obtained by dimer diol or a borrowing hydrogen method or the like can also be used as an active energy ray-curable resin by reacting with an isocyanate monomer having a (meth)acrylate group.

From the viewpoint of excellent weather resistance, the dimer acid di(meth)acrylate-based resin is preferably mixed at a content of 1 to 65 parts by weight, and more preferably 5 to 55 parts by weight, relative to 100 parts by weight of the total amount of the curable component, the fluorine compound, and the reactive silicone compound.

### [Polyfunctional (Meth)acrylate-based Compounds]

The polyfunctional (meth)acrylate-based compounds are compounds (excluding dimer acid di(meth)acrylate-based resin) having two or more (meth)acryloyl groups.

Examples of the polyfunctional (meth)acrylate-based compounds include compounds obtained by reacting a polyhydric alcohol with an α,β-unsaturated carboxylic acid. Examples thereof include trimethylolpropane di(meth)acrylate, trimethylolpropane tri(meth)acrylate, ethylene oxide (EO)-modified trimethylolpropane tri(meth)acrylate, propylene oxide (PO)-modified trimethylolpropane tri(meth)acrylate, EO,PO-modified trimethylolpropane tri(meth)acrylate, dimethyloltricyclodecane di(meth)acrylate, pentaerythritol tri(meth)acrylate, pentaerythritol tetra(meth)acrylate, ethylene glycol di(meth)acrylate, tetraethylene glycol di(meth)acrylate, phenylethylene glycol di(meth)acrylate, polyethylene glycol di(meth)acrylate, polypropylene glycol di(meth)acrylate, 1,4-butanediol di(meth)acrylate, 1,6-hexanediol di(meth)acrylate, neopentyl glycol di(meth)acrylate, 1,9-nonanediol di(meth)acrylate, 1,10-decanediol di(meth)acrylate, 1,12-dodecanediol diacrylate, 1,3-adamantanedimethanol di(meth)acrylate, o-xylylene di(meth)acrylate, m-xylylene di(meth)acrylate, p-xylylene di(meth)acrylate, tris(2-hydroxyethyl)isocyanurate tri(meth)acrylate, tris(acryloyloxy)isocyanurate, bis(hydroxymethyl)tricyclodecane di(meth)acrylate, dipentaerythritol penta(meth)acrylate, dipentaerythritol hexa(meth)acrylate, EO-modified 2,2-bis(4-((meth)acryloxy)phenyl)propane, PO-modified 2,2-bis(4-((meth)acryloxy)phenyl)propane, and EO,PO-modified 2,2-bis(4-((meth)acryloxy)phenyl)propane. Examples of trade names of products manufactured by Toagosei Co., Ltd. include Aronix M-210, Aronix M-215, Aronix M-220, Aronix M-233, Aronix M-240, Aronix M-245, Aronix M-305, M-306, Aronix M-309, Aronix M-313, Aronix M-315, Aronix M-321, Aronix M-325, M-350, and M-360.

From the viewpoint of excellent weather resistance, the polyfunctional (meth)acrylate-based compounds are preferably mixed at a content of 30 to 95 parts by weight, and more preferably 40 to 85 parts by weight, relative to 100 parts by weight of the total amount of the curable component, the fluorine compound, and the reactive silicone compound.

### [Photopolymerization Initiator]

The photopolymerization initiator is not particularly limited, and a photo-radical polymerization initiator that generates radicals upon exposure to active energy rays can be used. Examples thereof include 1-hydroxycyclohexyl phenyl ketone, benzophenone, Michler's ketone, 4,4'-bis(diethylamino)benzophenone, xanthone, thioxanthone, isopropyl xanthone, 2,4-diethylthioxanthone, 2-ethylanthraquinone, acetophenone, 2-hydroxy-2-methylpropiophenone, 2-hydroxy-2-methyl-4'-isopropylpropiophenone, isopropyl benzoin ether, isobutyl benzoin ether, 2,2-diethoxyacetophenone, 2,2-dimethoxy-2-phenylacetophenone, camphorquinone, benzanthrone, 2-methyl-1-[4-(methylthio)phenyl]-2-morpholinopropan-1-one, 2-benzyl-2-dimethylamino-1-(4-morpholinophenyl)-butanone-1, ethyl 4-dimethylaminobenzoate, isoamyl 4-dimethylaminobenzoate, 4,4'-di(t-butylperoxycarbonyl)benzophenone, 3,4,4'-tri(t-butylperoxycarbonyl)benzophenone, 2,4,6-trimethylbenzoyldiphenylphosphine oxide, 2-(4'-methoxystyryl)-4,6-bis(trichloromethyl)-s-triazine, 2-(3',4'-dimethoxystyryl)-4,6-bis(trichloromethyl)-s-triazine, 2-(2',4'-dimethoxystyryl)-4,6-bis(trichloromethyl)-s-triazine, 2-(2'-methoxystyryl)-4,6-bis(trichloromethyl)-s-triazine, 2-(4'-pentyloxystyryl)-4,6-bis(trichloromethyl)-s-triazine, 4-[p-N,N-di(ethoxycarbonylmethyl)]-2,6-di(trichloromethyl)-s-triazine, 1,3-bis(trichloromethyl)-5-(2'-chlorophenyl)-s-triazine, 1,3-bis(trichloromethyl)-5-(4'-methoxyphenyl)-s-triazine, 2-(p-dimethylaminostyryl)benzoxazole, 2-(p-dimethylaminostyryl)benzthiazole, 2-mercaptobenzothiazole, 3,3'-carbonylbis(7-diethylaminocoumarin), 2-(o-chlorophenyl)-4,4',5,5'-tetraphenyl-1,2'-biimidazole, 2,2'-bis(2-chlorophenyl)-4,4',5,5'-tetrakis(4-ethoxycarbonylphenyl)-1,2'-biimidazole, 2,2'-bis(2,4-dichlorophenyl)-4,4',5,5'-tetraphenyl-1,2'-biimidazole, 2,2'-bis(2,4-dibromophenyl)-4,4',5,5'-tetraphenyl-1,2'-biimidazole, 2,2'-bis(2,4,6-trichlorophenyl)-4,4',5,5'-tetraphenyl-1,2'-biimidazole, 3-(2-methyl-2-dimethylaminopropionyl)carbazole, 3,6-bis(2-methyl-2-morpholinopropionyl)-9-n-dodecylcarbazole, 1-hydroxycyclohexyl phenyl ketone, bis(η5-2,4-cyclopentadien-1-yl)-bis(2,6-difluoro-3-(1H-pyrrol-1-yl)-phenyl)titanium, 3,3',4,4'-tetra(t-butylperoxycarbonyl)benzophenone, 3,3',4,4'-tetra(t-hexylperoxycarbonyl)benzophenone, 3,3'-di(methoxycarbonyl)-4,4'-di(t-butylperoxycarbonyl)benzophenone, 3,4'-di(methoxycarbonyl)-4,3'-di(t-butylperoxycarbonyl)benzophenone, 4,4'-di(methoxycarbonyl)-3,3'-di(t-butylperoxycarbonyl)benzophenone, 2-hydroxy-1-{4-[4-(2-hydroxy-2-methyl-propionyl)-benzyl]phenyl}-2-methyl-propan-1-one, and bis(2,4,6-trimethylbenzoyl)-phenylphosphine oxide. These compounds may be used alone, and it is also effective that two or more of them are mixed for use.

From the viewpoint of excellent weather resistance, the photopolymerization initiator is preferably mixed at a content of 0.01 to 20 parts by weight, and more preferably 1 to 10 parts by weight, relative to 100 parts by weight of the total amount of the curable component, the fluorine compound, and the reactive silicone compound.

### [Photostabilizer Represented by Formula (1)]

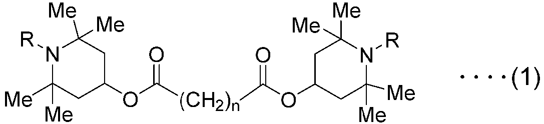

In formula (1), n is an integer of 4 to 12, R is each independently an alkyl having 1 to 5 carbon atoms or an alkoxy having 4 to 10 carbon atoms, and Me is methyl.

In formula (1), preferably, n is an integer of 6 to 12, and R is each independently an alkyl having 1 to 3 carbon atoms or an alkoxy having 6 to 8 carbon atoms; more preferably, n is an integer of 6 to 10, and R is each independently a linear alkyl having 1 to 3 carbon atoms or a linear alkoxy having 6 to 8 carbon atoms or cyclohexyloxy.

Preferable examples of the photostabilizer (hereinafter sometimes referred to as "photostabilizer (1)") represented by formula (1) include TINUVIN 765 (compound name: bis(1,2,2,6,6-pentamethyl-4-piperidinyl)sebacate), TINUVIN 292 (compound name: mixture of approximately 75% by weight of bis(1,2,2,6,6-pentamethyl-4-piperidinyl)sebacate and approximately 25% by weight of methyl(1,2,2,6,6-pentamethyl-4-piperidinyl)sebacate), and TINUVIN 123 (compound name: reaction product of decanedioic acid and bis(2,2,6,6-tetramethyl-1-(octyloxy)-4-piperidinyl)ester (in the presence of 1,1-dimethylethyl hydroperoxide and octane)), all of which are trade names of products manufactured by BASF.

From the viewpoint of excellent weather resistance, the photostabilizer (1) is preferably mixed at a content of 1 to 20 parts by weight, and more preferably 1 to 10 parts by weight, relative to 100 parts by weight of the total amount of the curable component, the fluorine compound, and the reactive silicone compound.

### [Ultraviolet Absorber]

The coating agent of the present invention may further contain an ultraviolet absorber. Examples of the ultraviolet absorber include an ultraviolet absorber such as benzotriazoles, hydroxyphenyltriazines, benzophenones, salicylates, cyanoacrylates, triazines, and dibenzoylresorcinols.

Examples of benzotriazoles include TINUVIN PS, TINUVIN 99-2, TINUVIN 326, TINUVIN 384-2, TINUVIN 900, TINUVIN 928, TINUVIN 1130, and TINUVIN Carboprotect, all of which are trade names of products manufactured by BASF. Examples of hydroxyphenyltriazines include TINUVIN 400, TINUVIN 405, TINUVIN 460, TINUVIN 477, and TINUVIN 479, all of which are trade names of products manufactured by BASF. Examples of benzophenones include ADK STAB 1413 manufactured by ADEKA Corporation and Sumisorb 130 manufactured by Sumika Chemtex Co., Ltd. Examples of salicylates include phenyl salicylate, p-tert-butylphenyl salicylate, and p-octylphenyl salicylate. Examples of cyanoacrylates include 2-ethylhexyl 2-cyano-3,3-diphenyl acrylate and ethyl 2-cyano-3,3-diphenyl acrylate. Examples of triazines include ADK STAB LA-46 and ADK STAB LA-F70, manufactured by ADEKA Corporation. Examples of dibenzoylresorcinols includes 4,6-dibenzoylresorcinol. These ultraviolet absorbers may be used alone, or multiple ultraviolet absorbers may be used in combination. The type and combination of the ultraviolet absorber are preferably selected as appropriate based on the wavelength of the ultraviolet ray to be absorbed.

From the viewpoint of excellent weather resistance, the ultraviolet absorber is preferably mixed at a content of 1 to 20 parts by weight, and more preferably 1 to 10 parts by weight, relative to 100 parts by weight of the total amount of the curable component, the fluorine compound, and the reactive silicone compound.

### [Fluorine Compound]

As the fluorine compound, at least one selected from the group consisting of a fluorosilsesquioxane monomer and a fluorosilsesquioxane polymer can be preferably used.

### •Fluorosilsesquioxane monomer

In the present invention, a fluorosilsesquioxane monomer is a monomer of fluorosilsesquioxane having at least one polymerizable functional group. It is sufficient that the fluorosilsesquioxane monomer has a property of readily accumulating at an interface between air and a solid (or liquid) in a hydrophobic atmosphere (for example, in air). In the case of the fluorosilsesquioxane monomer that accumulates at the interface, effects of the present invention can be sufficiently exhibited. Due to excellent surface accumulation property of such a fluorosilsesquioxane monomer, surface modification of the coating layer 12 can be performed effectively with a small amount.

As the fluorosilsesquioxane monomer used in the present invention, a compound can be used in which a substituent (R¹) in formula [(R¹-SiO_{1.5})ₙ] is replaced with a fluoroalkyl group (R^{f}). Specifically, examples of the fluorosilsesquioxane monomer include a fluorosilsesquioxane monomer having a cage-type molecular structure represented by the following formula (2).

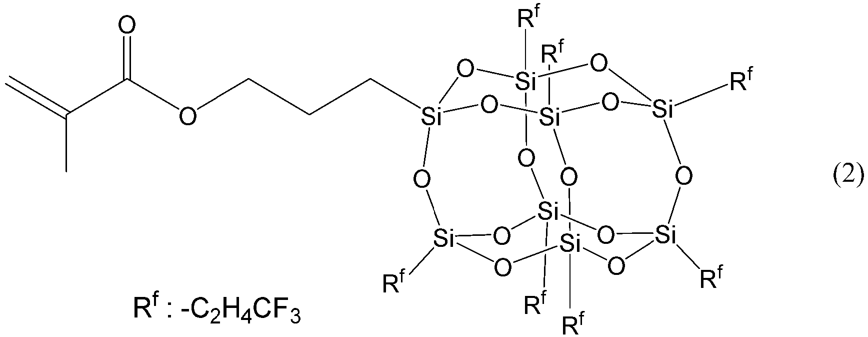

In formula (2), taking solubility in a solvent into consideration, the number of carbon atoms of R^{f} is preferably 1 to 8. R^{f} may be a linear group or a branched group. Specifically, examples of the linear group include -CH₂CH₂CF₃, -CH₂CH₂CF₂CF₃, -CH₂CH₂CF₂CF₂CF₃, - CH₂CH₂CF₂CF₂CF₂CF₃, -CH₂CH₂CF₂CF₂CF₂CF₂CF₃, and -CH₂CH₂CF₂CF₂CF₂CF₂CF₂CF₃, and examples of the branched group include -CH₂CH₂CF(CF₃)₂, -CH₂CH(CF₃)CF₂CF₃, - CH(CF₃)CH₂CF₂CF₃, -CH₂C(CF₃)₂CF₃, -C(CF₃)₂CH₂CF₃, -CH₂CH₂CF₂CF(CF₃)₂, - CH₂CH₂CF(CF₃)CF₂CF₃, and -CH₂CH₂C(CF₃)₂CF₃. R^{f} may be groups that are different from each other, or may all be the same group.

The above formula (2) illustrates a fluorosilsesquioxane monomer having "3-(methacryloyloxy)propyl" on one Si, but the polymerizable functional group is not limited thereto. For example, in the case where the position of "3-(methacryloyloxy)propyl" is designated as Z, this position can be replaced with another functional group. Specifically, Z may be any one of hydrogen, hydroxyl, alkenyl, or halogen (chlorine, bromine, iodine), alkoxy, phenoxy, polyalkyleneoxy, -COOH, 2-oxapropane-1,3-dioyl, alkoxycarbonyl, alkenyloxycarbonyl, oxiranyl, 3,4-epoxycyclohexyl, oxetanyl, oxetanylene, -NH-, -NH₂, -CN, -NCO, alkynyl, cycloalkenyl, acryloyloxy, methacryloyloxy, urethane acryloyl, urethane methacryloyl, -SH, and -PH₂. Furthermore, Z may also be any of the above groups (hydrogen to -PH₂) via an alkylene. The alkylene bonded to Si is not particularly limited, but alkylene having 1 to 8 carbon atoms is preferable, and propylene having 3 carbon atoms is particularly preferable. However, the selection range does not include groups having alkanoyloxy, groups having halogenated sulfonyl, and groups having an α-haloester group.

Particularly preferable is a fluorosilsesquioxane monomer in which at least two polymerizable functional groups are bonded to Si. For example, the above formula (2) illustrates a fluorosilsesquioxane monomer having "3-(methacryloyloxy)propyl" on one Si, but a fluorosilsesquioxane monomer having this "3-(methacryloyloxy)propyl" on one or more other Si is more preferable. Furthermore, the polymerizable functional group is preferably a radical polymerizable functional group.

### •Fluorosilsesquioxane polymer

In the present invention, the fluorosilsesquioxane polymer is an oligomer, a prepolymer, or a polymer of a fluorosilsesquioxane monomer, and has at least one polymerizable functional group. Since the fluorosilsesquioxane polymer has at least one polymerizable functional group, it corresponds to a so-called macromonomer or macromer. In the case where only one type of fluorosilsesquioxane monomer is used, the fluorosilsesquioxane polymer may be a homopolymer of fluorosilsesquioxane, or may be a copolymer with other general monomers (for example, addition polymerizable monomers). The fluorosilsesquioxane polymer may also be a copolymer of fluorosilsesquioxane monomers having different polymerizable functional groups. In this case, the polymerization method can be any known method. However, the fluorosilsesquioxane polymer after polymerization has at least one polymerizable functional group. Furthermore, the polymerizable functional group is preferably a radical polymerizable functional group.

That is, the fluorosilsesquioxane monomer of the above formula (2) may have an addition polymerizable functional group as Z, or may have an addition polymerizable functional group via an alkylene as Z. Examples of the addition polymerizable functional group include: a group having a terminal olefin-type or internal olefin-type radical polymerizable functional group; a group having a cationic polymerizable functional group such as vinyl ether and propenyl ether; and a group having an anionic polymerizable functional group such as vinyl carboxyl and cyanoacryloyl, with a radical polymerizable functional group being preferable.

The radical polymerizable functional group is not particularly limited as long as it is a group that undergoes radical polymerization, and examples thereof include methacryloyl, acryloyl, allyl, styryl, α-methylstyryl, vinyl, vinyl ether, vinyl ester, acrylamide, methacrylamide, N-vinylamide, maleic acid ester, fumaric acid ester, and N-substituted maleimide. Among them, a group containing (meth)acryl or styryl is preferable.

Examples of the radical polymerizable functional group having (meth)acryl include a group represented by the following formula (3). In formula (3), Y¹ represents an alkylene having 2 to 10 carbon atoms, preferably an alkylene having 2 to 6 carbon atoms, and more preferably propylene. X represents hydrogen or an alkyl having 1 to 3 carbon atoms, preferably hydrogen or methyl.

Examples of the radical polymerizable functional group having styryl include a group represented by the following formula (4). In formula (4), Y² represents a single bond or an alkylene having 1 to 10 carbon atoms, preferably a single bond or an alkylene having 1 to 6 carbon atoms, and more preferably a single bond or ethylene. The vinyl is bonded to any carbon of the benzene ring, and preferably bonded to the carbon at the para position relative to Y².

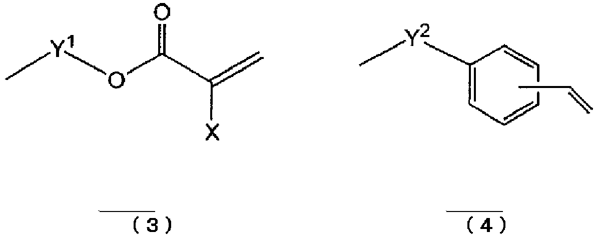

The addition polymerizable monomer includes those having a crosslinkable functional group and those having no crosslinkable functional group. It is sufficient that the addition polymerizable monomer having a crosslinkable functional group is a compound having one or two or more addition polymerizable double bonds, and may be any of a vinyl compound, a vinylidene compound, and a vinylene compound. More specific examples include a (meth)acrylic acid compound or a styrene compound.

Examples of the (meth)acrylic acid compound include (meth)acrylic acid and (meth)acrylic acid ester, as well as (meth)acrylic acid amide and (meth)acrylonitrile.

Examples of the (meth)acrylic acid compound of the addition polymerizable monomer include (meth)acrylate having a crosslinkable functional group. Examples of such a crosslinkable functional group include epoxy (that is, oxiranyl) such as glycidyl and epoxycyclohexyl, oxetanyl, isocyanato, acid anhydride, carboxyl, and hydroxyl, with epoxy (that is, oxiranyl) such as glycidyl or oxetanyl being preferable. Examples of the (meth)acrylate having a crosslinkable functional group include: hydroxyalkyl (meth)acrylate, such as (meth)acrylic acid, 2-hydroxyethyl (meth)acrylate, and 2-hydroxypropyl (meth)acrylate; epoxy-containing (meth)acrylate, such as glycidyl (meth)acrylate; alicyclic epoxy-containing (meth)acrylate, such as 3,4-epoxycyclohexylmethyl (meth)acrylate; oxetanyl-containing (meth)acrylate, such as 3-ethyl-3-(meth)acryloyloxymethyloxetane; 2-(meth)acryloyloxyethyl isocyanate; γ-(methacryloyloxypropyl)trimethoxysilane; (meth)acrylate-2-aminoethyl, 2-(2-bromopropionyloxy)ethyl (meth)acrylate, 2-(2-bromoisobutyryloxy)ethyl (meth)acrylate; and 1-(meth)acryloxy-2-phenyl-2-(2,2,6,6-tetramethyl-1-piperidinyloxy)ethane, 1-(4-((4-(meth)acryloxy)ethoxyethyl)phenylethoxy)piperidine, 1,2,2,6,6-pentamethyl-4-piperidyl (meth)acrylate, 2,2,6,6-pentamethyl-4-piperidyl (meth)acrylate.

Examples of the styrene compound having one addition polymerizable double bond include a styrene compound having a crosslinkable functional group. Examples of such a crosslinkable functional group include epoxy (that is, oxiranyl) such as glycidyl, oxetanyl, halo, amino, isocyanato, acid anhydride, carboxyl, hydroxyl, thiol, and siloxy.

Examples of the styrene compound having a crosslinkable functional group include o-aminostyrene, p-styrenechlorosulfonic acid, styrenesulfonic acid and a salt thereof, vinylphenylmethyl dithiocarbamate, 2-(2-bromopropionyloxy)styrene, 2-(2-bromoisobutyryloxy)styrene, 1-(2-((4-vinylphenyl)methoxy)-1-phenylethoxy)-2,2,6,6-tetramethylpiperidine, and compounds represented by the following formulae.

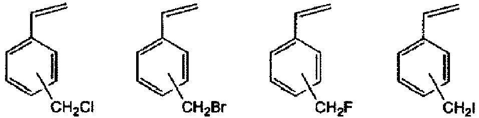

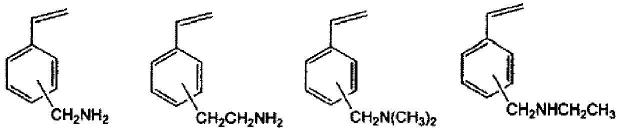

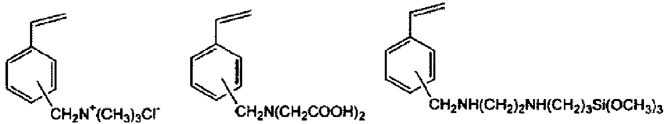

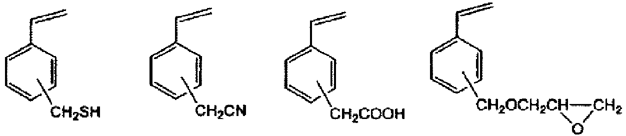

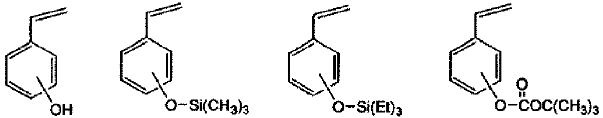

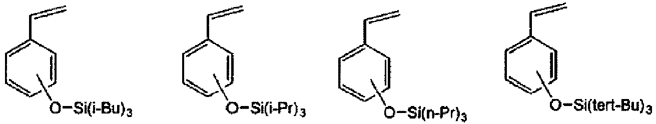

In addition to the addition polymerizable monomer described above, an addition polymerizable monomer other than the addition polymerizable monomer described above can optionally be used in combination in order to control compatibility with curable resin, leveling properties, and the amount of crosslinkable functional groups in the copolymer.

Examples of an addition polymerizable monomer having no crosslinkable functional group include a (meth)acrylic acid compound having one addition polymerizable double bond and having no crosslinkable functional group, and a styrene compound having one addition polymerizable double bond and having no crosslinkable functional group. Examples of such a (meth)acrylic acid compound include: alkyl (meth)acrylate, such as methyl (meth)acrylate, ethyl (meth)acrylate, n-propyl (meth)acrylate, isopropyl (meth)acrylate, butyl (meth)acrylate, isobutyl (meth)acrylate, t-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, and stearyl (meth)acrylate; aryl (meth)acrylate, such as phenyl (meth)acrylate and toluyl (meth)acrylate; arylalkyl (meth)acrylate, such as benzyl (meth)acrylate; alkoxyalkyl (meth)acrylate, such as 2-methoxyethyl (meth)acrylate, 3-methoxypropyl (meth)acrylate, and 3-methoxybutyl (meth)acrylate; and an ethylene oxide adduct of (meth)acrylic acid.

Examples of the (meth)acrylic acid compound having one addition polymerizable double bond and having no crosslinkable functional group further include fluoroalkyl (meth)acrylate, such as trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, perfluoroethyl (meth)acrylate, trifluoromethyl (meth)acrylate, diperfluoromethylmethyl (meth)acrylate, 2-perfluoromethyl-2-perfluoroethylethyl (meth)acrylate, 2-perfluorohexylethyl (meth)acrylate, 2-perfluorodecylethyl (meth)acrylate, and 2-perfluorohexadecylethyl (meth)acrylate.

Furthermore, examples of the (meth)acrylic acid compound having one addition polymerizable double bond and having no crosslinkable functional group include a (meth)acrylic acid compound having a silsesquioxane skeleton. Specific examples of such a (meth)acrylic acid compounds having a silsesquioxane skeleton include 3-(3,5,7,9,11,13,15-heptaethylpentacyclo[9.5.1.1^{3,9}.1^{5,15}.1^{7,13}]octasiloxan-1-yl)propyl (meth)acrylate, 3-(3,5,7,9,11,13,15-heptaisobutyl-pentacyclo[9.5.1.1^{3,9}.1^{5,15}.1^{7,13}]octasiloxan-l-y1)propyl (meth)acrylate, 3-(3,5,7,9,11,13,15-heptaisooctylpentacyclo[9.5.1.1^{3,9}.1^{5,15}.1^{7,13}]octasiloxan-1-yl)propyl (meth)acrylate, 3-(3,5,7,9,11,13,15-heptacyclopentylpentacyclo[9.5.1.1^{3,9}.1^{5,15}.1^{7,13}]octasiloxan-1-yl)propyl (meth)acrylate, 3-(3,5,7,9,11,13,15-heptaphenylpentacyclo[9.5.1.1^{3,9}.1^{5,15}.1^{7,13}]octasiloxan-1-yl)propyl (meth)acrylate, 3-[(3,5,7,9,11,13,15-heptaethylpentacyclo[9.5.1.1^{3,9}.1^{5,15}.1^{7,13}]octasiloxan-1-yloxy)dimethylsilyl]propyl (meth)acrylate, 3-[(3,5,7,9,11,13,15-heptaisobutylpentacyclo[9.5.1.1^{3,9}.1^{5,15}.1^{7,13}]octasiloxan-1-yloxy)dimethylsilyl]propyl (meth)acrylate, 3-[(3,5,7,9,11,13,15-heptaisooctylpentacyclo[9.5.1.1^{3,9}.1^{5,15}.1^{7,13}]octasiloxan-1-yloxy)dimethylsilyl]propyl (meth)acrylate, 3-[(3,5,7,9,11,13,15-heptacyclopentylpentacyclo[9.5.1.1^{3,9}.1^{5,15}.1^{7,13}]octasiloxan-1-yloxy)dimethylsilyl]propyl (meth)acrylate, and 3-[(3,5,7,9,11,13,15-heptaphenylpentacyclo[9.5.1.1^{3,9}.1^{5,15}.1^{7,13}]octasiloxan-1-yloxy)dimethylsilyl]propyl (meth)acrylate. Specific examples of the styrene compound having one addition polymerizable double bond and having no crosslinkable functional group include styrene, vinyltoluene, α-methylstyrene, and p-chlorostyrene.

Examples of the styrene compounds having one addition polymerizable double bond and having no crosslinkable functional group further include a styrene compound containing silsesquioxane. Examples of such a styrene compound containing silsesquioxane include: octasiloxane (T8-type silsesquioxane) having a 4-vinylphenyl group, such as 1-(4-vinylphenyl)-3,5,7,9,11,13,15-heptaethylpentacyclo[9.5.1.1^{3,9}.1^{5,15}.1^{7,13}]octasiloxane, 1-(4-vinylphenyl)-3,5,7,9,11,13,15-heptaisobutylpentacyclo[9.5.1.1^{3,9}.1^{5,15}.1^{7,13}]octasiloxane, 1-(4-vinylphenyl)-3,5,7,9,11,13,15-heptaisooctylpentacyclo[9.5.1.1^{3,9}.1^{5,15}.1^{7,13}]octasiloxane, 1-(4-vinylphenyl)-3,5,7,9,11,13,15-heptacyclopentylpentacyclo[9.5.1.1^{3,9}.1^{5,15}.1^{7,13}]octasiloxane, and 1-(4-vinylpheny1)-3,5,7,9,11,13,15-heptaphenylpentacyclo[9.5.1.1^{3,9}.1^{5,15}.1^{7,13}]octasiloxane; and octasiloxane (T8-type silsesquioxane) having a 4-vinylphenylethyl group, such as 3-(3,5,7,9,11,13,15-heptaethylpentacyclo[9.5.1.1^{3,9}.1^{5,15}.1^{7,13}]octasiloxan-1-yl)ethylstyrene, 3-(3,5,7,9,11,13,15-heptaisobutylpentacyclo[9.5.1.1^{3,9}.1^{5,15}.1^{7,13}]octasiloxan-1-yl)ethylstyrene, 3-(3,5,7,9,11,13,15-heptaisooctylpentacyclo[9.5.1.1^{3,9}.1^{5,15}.1^{7,13}]octasiloxan-1-yl)ethylstyrene, 3-(3,5,7,9,11,13,15-heptacyclopentylpentacyclo[9.5.1.1^{3,9}.1^{5,15}.1^{7,13}]octasiloxan-1-yl)ethylstyrene, 3-(3,5,7,9,11,13,15-heptaphenylpentacyclo[9.5.1.1^{3,9}.1^{5,15}.1^{7,13}]octasiloxan-1-yl)ethylstyrene, 3-((3,5,7,9,11,13,15-heptaethylpentacyclo[9.5.1.1^{3,9}.1^{5,15}.1^{7,13}]octasiloxan-1-yloxy)dimethylsilyl)ethylstyrene, 3-((3,5,7,9,11,13,15-heptaisobutylpentacyclo[9.5.1.1^{3,9}.1^{5,15}.1^{7,13}]octasiloxan-1-yloxy)dimethylsilyl)ethylstyrene, 3-((3,5,7,9,11,13,15-heptaisooctylpentacyclo[9.5.1.1^{3,9}.1^{5,15}.1^{7,13}]octasiloxan-1-yloxy)dimethylsilyl)ethylstyrene, 3-((3,5,7,9,11,13,15-heptacyclopentylpentacyclo[9.5.1.1^{3,9}.1^{5,15}.1^{7,13}]octasiloxan-1-yloxy)dimethylsilyl)ethylstyrene, and 3-((3,5,7,9,11,13,15-heptaphenylpentacyclo[9.5.1.1^{3,9}.1^{5,15}.1^{7,13}]octasiloxan-1-yloxy)dimethylsilyl)ethylstyrene.

Furthermore, examples of the addition polymerizable monomer other than the addition polymerizable monomer described above include a macromonomer having a main chain derived from styrene, (meth)acrylic acid ester, siloxane, and alkylene oxide such as ethylene oxide and propylene oxide, and having one polymerizable double bond.

Examples of the addition polymerizable monomer also include a compound having two addition polymerizable double bonds. Examples of the compound having two addition polymerizable double bonds include a di(meth)acrylate-based monomer such as 1,3-butanediol di(meth)acrylate, 1,4-butanediol di(meth)acrylate, 1,6-hexanediol di(meth)acrylate, polyethylene glycol di(meth)acrylate, diethylene glycol di(meth)acrylate, neopentyl glycol di(meth)acrylate, triethylene glycol di(meth)acrylate, tripropylene glycol di(meth)acrylate, hydroxypivalic acid ester neopentyl glycol di(meth)acrylate, trimethylolpropane di(meth)acrylate, bis[(meth)acryloyloxyethoxy]bisphenol A, bis[(meth)acryloyloxyethoxy]tetrabromobisphenol A, bis[(meth)acryloxypolyethoxy]bisphenol A, 1,3-bis(hydroxyethyl)5,5-dimethylhydantoin, 3-methylpentanediol di(meth)acrylate, di(meth)acrylate of hydroxypivalic acid ester neopentyl glycol compound, and bis[(meth)acryloyloxypropyl]tetramethyldisiloxane, and divinylbenzene.

Furthermore, examples also include a macromonomer having a main chain derived from styrene, (meth)acrylic acid ester, siloxane, and alkylene oxide such as ethylene oxide and propylene oxide, and having two polymerizable double bonds.

Examples of the addition polymerizable monomer also include a compound having three or more addition polymerizable double bonds. Examples of the compound having three or more addition polymerizable double bonds include trimethylolpropane tri(meth)acrylate, pentaerythritol tri(meth)acrylate, pentaerythritol tetra(meth)acrylate, dipentaerythritol monohydroxypenta(meth)acrylate, tris(2-hydroxyethyl isocyanate) tri(meth)acrylate, tris(diethylene glycol) trimellitate tri(meth)acrylate, 3,7,14-tris[(((meth)acryloyloxypropyl)dimethylsiloxy)]-1,3,5,7,9,11,14-heptaethyltricyclo[7.3.3.1^{5,11}]heptasiloxane, 3,7,14-tris[(((meth)acryloyloxypropyl)dimethylsiloxy)]-1,3,5,7,9,11,14-heptaisobutyltricyclo[7.3.3.1^{5,11}]heptasiloxane, 3,7,14-tris[(((meth)acryloyloxypropyl)dimethylsiloxy)]-1,3,5,7,9,11,14-heptaisooctyltricyclo[7.3.3.1^{5,11}]heptasiloxane, 3,7,14-tris[(((meth)acryloyloxypropyl)dimethylsiloxy)]-1,3,5,7,9,11,14-heptacyclopentyltricyclo[7.3.3.1^{5,11}]heptasiloxane, 3,7,14-tris[(((meth)acryloyloxypropyl)dimethylsiloxy)]-1,3,5,7,9,11,14-heptaphenyltricyclo[7.3.3.1^{5,11}]heptasiloxane, octakis(3-(meth)acryloyloxypropyl dimethylsiloxy)octasilsesquioxane, and octakis(3-(meth)acryloyloxypropyl)octasilsesquioxane.

Furthermore, examples also include a macromonomer having a main chain derived from styrene, (meth)acrylic acid ester, siloxane, and alkylene oxide such as ethylene oxide and propylene oxide, and having three or more polymerizable double bonds.

The addition polymerizable monomer is preferably a (meth)acrylic acid compound, more preferably a (meth)acrylic acid ester, and further preferably a lower alkyl (for example, having 1 to 3 carbon atoms) ester of (meth)acrylic acid, or an ester having a crosslinkable functional group.

The polymer is an addition polymer of a fluorosilsesquioxane monomer or an addition copolymer with other addition polymerizable monomers. In the case of a copolymer, the polymer may be a stereoregular copolymer such as a block copolymer, or a random copolymer, but is preferably a random copolymer. The polymer may have a crosslinked structure or may be a graft copolymer.

The content of the fluorine compound is preferably 0.1 to 10 parts by weight, and more preferably 0.1 to 5 parts by weight, relative to 100 parts by weight of the total amount of the curable component, the fluorine compound, and the reactive silicone compound. At 0.1 part by weight or more, the antifouling properties of the coating layer 12 can be improved and slipperiness can be imparted; at 10 parts by weight or less, a reduction in flexibility of the coating layer 12 and deterioration of self-healing properties can be avoided.

### [Solvent]

The dimer acid di(meth)acrylate-based resin, polyfunctional (meth)acrylate-based compounds, photopolymerization initiator, and photostabilizer (1) contained in the coating agent of the present invention, as well as the ultraviolet absorber and fluorine compound contained as needed, may be dissolved in a solvent such as an organic solvent for use. The solvent is not particularly limited, and a general organic solvent or the like can be used. Examples of the solvent include a hydrocarbon-based solvent (such as benzene and toluene), an ether-based solvent (such as diethyl ether, tetrahydrofuran (THF), diphenyl ether, anisole, and dimethoxybenzene), a halogenated hydrocarbon-based solvent (such as methylene chloride, chloroform, and chlorobenzene), a ketone-based solvent (such as acetone, methyl ethyl ketone, and methyl isobutyl ketone), an alcohol-based solvent (such as methanol, ethanol, propanol, isopropanol, butyl alcohol, and t-butyl alcohol), a nitrile-based solvent (such as acetonitrile, propionitrile, and benzonitrile), an ester-based solvent (such as ethyl acetate, butyl acetate, and methyl 2-hydroxyisobutyrate), a carbonate-based solvent (such as ethylene carbonate and propylene carbonate), an amide-based solvent (such as N,N-dimethylformamide and N,N-dimethylacetamide), a hydrochlorofluorocarbon-based solvent (such as HCFC-141b and HCFC-225), a hydrofluorocarbon (HFCs)-based solvent (such as HFCs having 2 to 4, 5, and 6 or more carbon atoms), a perfluorocarbon-based solvent (such as perfluoropentane and perfluorohexane), an alicyclic hydrofluorocarbon-based solvent (such as fluorocyclopentane and fluorocyclobutane), an oxygen-containing fluorine-based solvent (such as fluoroether, fluoropolyether, fluoroketone, and fluoroalcohol), an aromatic fluorine-based solvent (such as α,α,α-trifluorotoluene and hexafluorobenzene), and water.

These solvents may be used alone or in combination of two or more. For example, a mixed solvent of methyl ethyl ketone and methyl isobutyl ketone can be used. By adding a solvent such as methyl ethyl ketone, workability in homogenizing the solution during preparation of the coating agent can be improved. By improving solubility, the coating agent can be stabilized. A mixing ratio (by weight) may be, for example, in the range of methyl isobutyl ketone/methyl ethyl ketone = 1 to 99/99 to 1, and is preferably in the range of 20 to 80/80 to 20. The content of the solvent also used as a diluent is preferably 20 to 500 parts by weight, and more preferably 50 to 400 parts by weight, relative to 100 parts by weight of the total amount of the curable component, the fluorine compound, and the reactive silicone compound of the coating agent forming the coating layer.

### [Additives]

Various additives may be added to the coating agent as needed. For example, in order to impart hardness and scratch resistance to the coating layer, a filler may be added. A leveling agent for improving coatability, or a reactive silicone for improving squeegee (or squilgee) properties during application may also be added. In addition, an additive such as a photostabilizer other than the photostabilizer (1) and a defoaming agent may be added.

More specifically, an optional component, such as an active energy ray sensitizer, a polymerization inhibitor, a polymerization initiation aid, a leveling agent, a wettability improver, a surfactant, a plasticizer, a photostabilizer other than the photostabilizer (1), an antioxidant, an antistatic agent, a silane coupling agent, an inorganic filler (such as silica or alumina), and an organic filler, may further be contained in the coating agent within a range that does not adversely affect the effects of the coating layer formed by the coating agent.

Examples of the leveling agent include, as commercially available products, acrylic surface conditioners BYK-350, BYK-352, BYK-354, BYK-356, BYK-381, BYK-392, BYK-394, BYK-3441, BYK-3440, and BYK-3550 (all trade names, manufactured by BYK-Chemie Japan K.K.).

Examples of silicone-based surface conditioners include BYK-UV3500 and BYK-UV-3570 (both trade names, manufactured by BYK-Chemie Japan K.K.), TEGO Rad 2100, 2200N, 2250, 2500, 2600, and 2700 (all trade names, manufactured by Evonik Degussa Japan Co., Ltd.), and X-22-2445, X-22-2455, X-22-2457, X-22-2458, X-22-2459, X-22-1602, X-22-1603, X-22-1615, X-22-1616, X-22-1618, X-22-1619, X-22-2404, X-22-2474, X-22-174DX, X-22-8201, X-22-2426, X-22-164A, and X-22-164C (all trade names, manufactured by Shin-Etsu Chemical Co., Ltd.).

Examples of the photostabilizer other than the photostabilizer (1) include a hindered benzoate-based photostabilizer and a hindered amine light stabilizer (HALS) other than the photostabilizer (1).

Examples of the hindered benzoate-based photostabilizer include n-hexadecyl-3,5-dit-butyl-4-hydroxybenzoate, 2,4-di-t-butylphenyl-3,5-di-t-butyl-4-hydroxybenzoate, and 2,4-di-t-amylphenyl-3,5-di-t-butyl-4-hydroxybenzoate. Examples of the hindered amine light stabilizer (HALS) other than the photostabilizer (1) include TINUVIN (registered trademark) 5100 (neutraltype general-purpose HALS), TINUVIN 152 (compound name: 2,4-bis[N-butyl-N-(1-cyclohexyloxy-2,2,6,6-tetramethylpiperidin-4-yl)amino]-6-(2-hydroxyethylamine)-1,3,5-triazine), TINUVIN 144 (compound name: bis(1,2,2,6,6-pentamethyl-4-piperidinyl)-[[3,5-bis(1,1-dimethylethyl)-4-hydroxyphenyl]methyl]butylmalonate), and TINUVIN 111FDL (mixture of approximately 50% by weight of TINUVIN 622, compound name: (butanedioic acid polymer (in the presence of 4-hydroxy-2,2,6,6-tetramethylpiperidinyl-yl)ethanol)) and approximately 50% by weight of CHIMASSORB 119, compound name: N-N'-N"-N"'-tetrakis(4,6-bis(butyl-(N-methyl-2,2,6,6-tetramethylpiperidin-4-yl)amino)triazin-2-yl)-4,7-diazadecane-1,10-diamine), all of which are trade names of products manufactured by BASF; or ADK STAB LA series manufactured by ADEKA Corporation, specifically LA-52 ((5)-6116), LA-57 ((5)-5555), LA-62 ((5)-5711), LA-67 ((5)-5755), LA-82 ((5)-6023), and LA-87 ((5)-6022). The numbers in parentheses are existing chemical substance numbers.

Examples of the inorganic filler include, as commercially available products (trade names), MEK-ST-40, MEK-ST-L, MEK-ST-ZL, PGM-AC-2140Y, PGM-AC-4130Y, AS-200, and AS-520, manufactured by Nissan Chemical Corporation; anatase TiO₂, Al₂O₃, ZnO, ZrO₂, and cobalt blue, manufactured by CIK Nanotek Corporation; and zirconium oxide, barium titanate, titanium oxide, silica, alumina, and MUA filler, manufactured by Mikuni Color Ltd.

Examples of the organic filler include, as commercially available products (trade names), Techpolymer MBX series and SBX series, manufactured by Sekisui Kasei Co., Ltd.; Art Pearl crosslinked acrylic beads and Art Pearl crosslinked urethane beads, manufactured by Negami Chemical Industrial Co., Ltd.; and Ganz Pearl, manufactured by Aica Kogyo Company, Limited.

These fillers may be used alone, or multiple fillers may be used in combination.

### [Reactive Silicone Compound]

The reactive silicone compound is a group of silicone compounds also referred to as reactive silicone oils or polysiloxane-based macromonomers. These are used as raw materials of block copolymers or graft copolymers in the field of polymer synthesis, and also as resin modifiers and coating modifiers. This component may improve the surface smoothness of the coating agent of the present invention and may improve the squeegee properties during application. As such a component, a terminal vinyl group-containing polyorganosiloxane compound is preferable, and a polydimethylsiloxane macromonomer having a methacryloyl group at a terminal is more preferable.

The content of the reactive silicone compound is preferably 0.01 to 10 parts by weight, and more preferably 0.1 to 5 parts by weight, relative to 100 parts by weight of the total amount of the curable component, the fluorine compound, and the reactive silicone compound. At 0.01 part by weight or more, the surface smoothness and antifouling properties of the coating layer 12 can be improved, slipperiness can be imparted, and the squeegee properties during application can be improved. At 10 parts by weight or less, a reduction in flexibility of the coating layer 12 and deterioration of self-healing properties can be avoided.

Other components may be added to the coating agent of the present invention. Examples of the other components include thermoplastic resin and rubber. By adding thermoplastic resin and rubber, the properties (such as mechanical properties, surface and interface properties, and compatibility) of the coating layer can be modified. Examples of commercial products of the reactive silicone compound include X-22-164A (having a number average molecular weight of 860, manufactured by Shin-Etsu Chemical Co., Ltd.), X-22-164B (manufactured by Shin-Etsu Chemical Co., Ltd.), X-22-164C (manufactured by Shin-Etsu Chemical Co., Ltd.), X-24-164E (manufactured by Shin-Etsu Chemical Co., Ltd.), X-22-174DX (manufactured by Shin-Etsu Chemical Co., Ltd.), X-24-8201 (manufactured by Shin-Etsu Chemical Co., Ltd.), X-22-2426 (manufactured by Shin-Etsu Chemical Co., Ltd.), both-terminal type Silaplane FM-7711 (manufactured by JNC Corporation), both-terminal type Silaplane FM-7721 (manufactured by JNC Corporation), both-terminal type Silaplane FM-7725 (manufactured by JNC Corporation), single-terminal type Silaplane FM-0711 (manufactured by JNC Corporation), single-terminal type Silaplane FM-0721 (having a number average molecular weight of 5,000, manufactured by JNC Corporation), single-terminal type Silaplane FM-0725 (having a number average molecular weight of 10,000, manufactured by JNC Corporation), single-terminal type Silaplane TM-0701 (having a number average molecular weight of 423, manufactured by JNC Corporation), single-terminal type Silaplane TM-0701T (having a number average molecular weight of 423, manufactured by JNC Corporation), BYK-UV3500 (manufactured by BYK-Chemie Japan K.K.), BYK-UV3510 (manufactured by BYK-Chemie Japan K.K.), BYK-UV3570 (manufactured by BYK-Chemie Japan K.K.), TEGO Rad 2100 (manufactured by Tego Chemie Service GmbH), TEGO Rad 2200N (manufactured by Tego Chemie Service GmbH), TEGO Rad 2250 (manufactured by Tego Chemie Service GmbH), TEGO Rad 2500 (manufactured by Tego Chemie Service GmbH), TEGO Rad 2600 (manufactured by Tego Chemie Service GmbH), TEGO Rad 2600 (manufactured by Tego Chemie Service GmbH), and TEGO Rad 2700 (manufactured by Tego Chemie Service GmbH).

Examples of the thermoplastic resin include polyethylene, polypropylene, polyvinyl chloride, polyvinylidene chloride, polystyrene, acrylonitrile-styrene resin, acrylonitrile-butadienestyrene resin, poly(meth)acrylate resin, ultra-high molecular weight polyethylene, poly-4-methylpentene, syndiotactic polystyrene, polyacetal, polycarbonate, polyphenylene oxide, polyphenylene sulfide, polysulfone, polyethersulfone, polyether ether ketone, polyarylate (such as U Polymer: trade name, manufactured by Unitika Ltd., and Vectra: trade name, manufactured by Polyplastics Co., Ltd.), polyimide (such as Kapton: trade name, manufactured by Toray Industries, Inc., and AURUM: trade name, manufactured by Mitsui Chemicals, Inc.), polyetherimide and polyamideimide, polyamide such as Nylon 6, Nylon 6,6, Nylon 6,10, Nylon MXD6, and Nylon 6,T (all trade names, manufactured by DuPont), polyester such as polyethylene terephthalate, polybutylene terephthalate, and polyethylene-2,6-naphthalenedicarboxylate, and fluororesin such as polytetrafluoroethylene and polyvinylidene fluoride.

The coating agent used for forming the coating layer 12 is required to be in a liquid state. Hence, in the case where the coating agent contains a solid, as described above, the solid may be dissolved in a solvent for use as a liquid. The concentration of the curable component in the coating agent can be selected so that the viscosity of the coating agent corresponds to a viscosity appropriate for a coating method such as the wet coating method. The concentration is preferably 1% to 80% by weight, more preferably 3% to 75% by weight, and further preferably 3% to 60% by weight. The concentration of the curable component in the coating agent can be adjusted by using a solvent. For the solvent, a general organic solvent such as methyl ethyl ketone and methyl isobutyl ketone can be used. In the case where the coating agent contains a fluorine compound, if the solubility in the solvent decreases due to the length of the fluoroalkyl group of the fluorine compound or other factors, a fluorine-based organic solvent may be used.

### [Curing Method]

Examples of curing treatment for curing the coating agent include ultraviolet ray irradiation, heating, and electron beam irradiation. In the case where the coating film contains a solvent, it is preferable to heat the coating film within a range of 70 to 200 °C for several tens of minutes to remove the solvent remaining in the coating film, and then perform the curing treatment. For the curing by ultraviolet ray irradiation, ultraviolet rays having a wavelength of 200 to 400 nm from a UV lamp (for example, high-pressure mercury lamp, ultra-high-pressure mercury lamp, a metal halide lamp, or high-power metal halide lamp) may be irradiated onto the coating liquid for a short period of time (within a range of several seconds to several tens of seconds). For the curing by electron beam irradiation, a low-energy electron beam from a self-shielding low-energy electron accelerator of 300 keV or less may be irradiated onto the coating liquid.

### [Adhesive Layer 13]

As shown in FIG. 1, the adhesive layer 13 is formed by applying an adhesive to a surface side of the substrate layer 11 opposite to a surface on which the coating layer 12 is provided. The adhesive layer 13 may be formed directly on a surface of the substrate layer 11, or may be laminated with another layer interposed between the adhesive layer 13 and the substrate layer 11. As the adhesive used for the adhesive layer 13, an acrylic-based adhesive, a rubber-based adhesive, a urethane-based adhesive, a silicone-based adhesive or the like can be used. For applications requiring long-term durability from the viewpoint of product design, an acrylic-based adhesive having excellent heat resistance and weather resistance is preferable. In the adhesive layer 13, unevenness is provided on the adhesive surface from the viewpoint of adhesion characteristics to an article serving as an adherend.

Examples of the acrylic-based adhesive include an acrylic-based adhesive containing an acrylic-based copolymer obtained by copolymerizing a monomer component mainly composed of an acrylic acid ester with a monomer component having a functional group such as a carboxyl group or a hydroxyl group. Examples of the acrylic acid ester include methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, t-butyl (meth)acrylate, pentyl (meth)acrylate, isopentyl (meth)acrylate, hexyl (meth)acrylate, cyclohexyl (meth)acrylate, heptyl (meth)acrylate, n-octyl (meth)acrylate, isooctyl (meth)acrylate, 2-ethylhexyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, eicosyl (meth)acrylate, isobornyl (meth)acrylate, and 1-adamantyl (meth)acrylate. These alkyl (meth)acrylates may be used alone or in combinations of two or more.

The following monomer components may be copolymerized with the alkyl (meth)acrylates described above. Examples of copolymerizable monomer components include: a monomer containing a carboxyl group such as itaconic acid, maleic acid, crotonic acid, isocrotonic acid, fumaric acid, (meth)acrylic acid, carboxyethyl (meth)acrylate, and carboxypentyl (meth)acrylate; a hydroxyl group-containing monomer, such as 2-hydroxyethyl (meth)acrylate, 3-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, and (4-hydroxymethylcyclohexyl)-methyl acrylate; a glycidyl group-containing monomers such as glycidyl (meth)acrylate and methyl glycidyl (meth)acrylate; a cyanoacrylate-based monomer, such as acrylonitrile and methacrylonitrile; a nitrogen-containing monomer, such as N,N-dimethylaminoethyl (meth)acrylate, N,N-dimethylaminopropyl (meth)acrylamide, N,N-dimethyl (meth)acrylamide, N,N-diethyl (meth)acrylamide, N-isopropyl (meth)acrylamide, N-hydroxyethyl (meth)acrylamide, (meth)acryloylmorpholine, N-vinyl-2-piperidone, N-vinyl-3-morpholinone, N-vinyl-2-caprolactam, N-vinyl-2-pyrrolidone, N-vinyl-1,3-oxazin-2-one, N-vinyl-3,5-morpholinedione, N-cyclohexylmaleimide, N-phenylmaleimide, N-acryloylpyrrolidine, and t-butylaminoethyl (meth)acrylate; and a monomer such as styrene, a styrene derivative, and vinyl acetate. One or two or more of these monomers may be used in copolymerization with a (meth)acrylic acid ester as needed.

The adhesive used in the present invention is preferably, for example, an acrylic-based copolymer composed of at least one selected from the group consisting of butyl acrylate and 2-ethylhexyl acrylate, and at least one carboxyl group-containing monomer selected from the group consisting of acrylic acid and methacrylic acid. The adhesive used in the present invention may have methyl acrylate, vinyl acetate, methyl methacrylate, acrylonitrile, or the like added thereto to improve heat resistance and weather resistance. An ultraviolet absorber, a photostabilizer, or the like may be added as needed to further improve various physical properties such as weather resistance. The proportion of these additives is preferably 10% to 80% by weight, more preferably 20% to 70% by weight, and further preferably 30% to 60% by weight, relative to the total amount of the adhesive.

The weight average molecular weight (Mw) of the acrylic copolymer is preferably 50,000 to 2,000,000, more preferably 100,000 to 1,500,000, and further preferably 150,000 to 1,000,000. The number average molecular weight (Mn) is preferably 10,000 to 500,000, more preferably 10,000 to 400,000, and further preferably 10,000 to 300,000.

A composition that constitutes the adhesive layer 13 can be applied to the release film 14 or the substrate layer 11 by a gravure coating method, a bar coating method, a spray coating method, a spin coating method, a roll coating method, a die coating method, a knife coating method, an air knife coating method, a hot melt coating method, a curtain coating method, or the like, which are commonly performed. From the viewpoint of adhesion after attachment, the adhesive layer 13 has a thickness of typically 10 to 100 µm, preferably 15 to 50 µm, more preferably 25 to 45 µm, and particularly preferably 35 to 40 µm.

By attaching the release film 14 having unevenness formed thereon and transferring unevenness to the adhesive layer 13, surface unevenness is physically formed on the adhesive layer 13.

### [Release Film 14]

As the release film 14, a resin film of polyethylene terephthalate, polyethylene, or polypropylene coated on one or both sides with a release agent such as silicone-based resin, fluororesin-based resin, or long-chain alkyl group-containing carbamate can be used. Alternatively, a plastic film such as polyester resin-based or polyolefin-based resin, or sized paper such as cellophane or glassine paper, can be used. A thickness of the release film 14 varies somewhat depending on the material used, but is typically 10 to 250 µm, preferably 20 to 200 µm, and more preferably 50 to 75 µm.

### [Article]

An article according to a third embodiment of the present invention is an article to which the laminate of the present invention is attached to a surface by the adhesive layer. The article before the laminate of the present invention is attached thereto is used as an adherend. Examples of the article as the adherend include a lighting fixture of vehicles such as automobiles, motorcycles, and trains, as well as aircraft and ships. The laminate of the present invention is effective for protecting painted surfaces of transparent plastic portions of various body portions of the above articles, particularly portions (such as front hood tips and other tip surfaces and rocker panels) exposed to hazards such as flying debris (such as sand and stones) and insects.

### Examples

The present invention is described in detail below using examples. However, the present invention is not limited to the contents described in the following examples.

### [Production of Fluorosilsesquioxane Polymer Containing γ-methacryloxypropylhepta(trifluoropropyl)-T8-silsesquioxane Unit being Fluorine Compound]

First, γ-methacryloxypropylhepta(trifluoropropyl)-T8-silsesquioxane was synthesized by the following procedure. Into a 1 L four-necked flask equipped with a reflux condenser, a thermometer, and a dropping funnel, trifluoropropyltrimethoxysilane (100 g), THF (500 mL), deionized water (10.5 g), and sodium hydroxide (7.9 g) were charged, and heated using an oil bath from room temperature to a reflux temperature of THF while being stirred with a magnetic stirrer. Stirring was continued for 5 hours from the start of reflux to complete the reaction. Thereafter, the flask was removed from the oil bath, left to stand at room temperature overnight, and then set in the oil bath again and concentrated by heating under constant pressure until a solid precipitated.

The precipitated product was collected by filtration using a pressure filter equipped with a membrane filter having a pore size of 0.5 µm. Next, the obtained solid was washed once with THF and dried in a vacuum dryer at 80 °C for 3 hours to obtain 74 g of a colorless powdery solid.

The obtained solid (65 g), dichloromethane (491 g), and triethylamine (8.1 g) were charged into a 1 L four-necked flask equipped with a reflux condenser, a thermometer, and a dropping funnel, and cooled to 3 °C in an ice bath. Next, γ-methacryloxypropylchlorosilane (21.2 g) was added. After it was confirmed that heat generation had subsided, the flask was removed from the ice bath and aged at room temperature overnight. After washing three times with deionized water, the dichloromethane layer was dehydrated with anhydrous magnesium sulfate, and the magnesium sulfate was removed by filtration. The mixture was concentrated using a rotary evaporator until a viscous solid precipitated, and 260 g of methanol was added and stirred until a powder formed. The powder was filtered using a pressure filter equipped with a filter paper having a retention particle size of 5 µm, and dried in a vacuum dryer at 65 °C for 3 hours to obtain 41.5 g of a colorless powdery solid. GPC and ¹H-NMR measurements were performed on the obtained solid, and the formation of γ-methacryloxypropylhepta(trifluoropropyl)-T8-silsesquioxane (5) represented by the following formula (5) was confirmed.

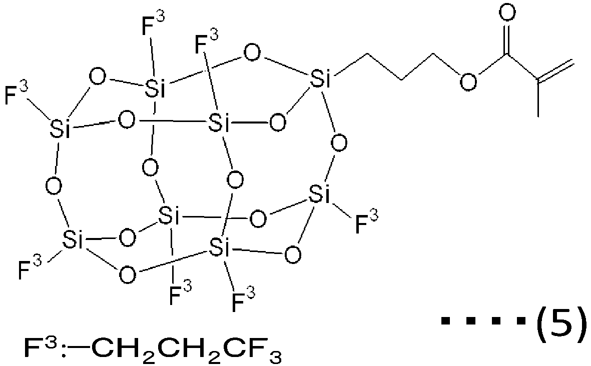

Next, a polymer containing a γ-methacryloxypropylhepta(trifluoropropyl)-T8-silsesquioxane unit was synthesized by the following procedure.

Into a nitrogen-sealed four-necked round-bottom flask equipped with a reflux condenser and a dropping funnel, the above γ-methacryloxypropylhepta(trifluoropropyl)-T8-silsesquioxane (5) (25 g), Silaplane FM-0721 (trade name, polydimethylsiloxane macromonomer having a methacryloyl group at one terminal with a number average molecular weight Mn of 5,000, 6.3 g, manufactured by JNC Corporation), 2-hydroxyethyl methacrylate (18.8 g), methyl methacrylate (12.5 g), and methyl ethyl ketone (62 g) were added, and the mixture was refluxed and degassed for 15 minutes using an oil bath. Then, a solution in which azobisisobutyronitrile (0.48 g) and mercaptoacetic acid (0.054 g) were dissolved in methyl ethyl ketone (4.8 g) was placed therein to initiate polymerization. 3 hours after the initiation of polymerization, azobisisobutyronitrile (0.48 g) was dissolved in methyl ethyl ketone (4.3 g), added, and aged for 5 hours to obtain a solution of the resulting copolymer. Furthermore, para-methoxyphenol (0.16 g) as a polymerization inhibitor and dibutyltin dilaurate (0.15 g, manufactured by Resonac Corporation) were dissolved in methyl ethyl ketone (1.5 g) and added, after which Karenz AOI (trade name, acryloyloxyethyl isocyanate, 26.4 g, manufactured by Resonac Corporation) was added dropwise using the dropping funnel so that the liquid temperature ranged from 35 °C to 50 °C, and the mixture was aged at 45 °C for 3 hours after the completion of the dropwise addition.

Then, methanol (9 g) was added and the mixture was treated, after which para-methoxyphenol (0.16 g) was further added, and the mixture was diluted with methyl isobutyl ketone (107.3 g) to obtain a 30 wt% solution of a fluorosilsesquioxane polymer (hereinafter sometimes referred to as "XUA008") containing a γ-methacryloxypropylhepta(trifluoropropyl)-T8-silsesquioxane unit and having an acryloyl group in a side chain.

The obtained XUA008 had a weight average molecular weight: Mw of 42,000 and a polydispersity index: Mw/Mn of 1.9. The weight average molecular weight and polydispersity index were measured using gel permeation chromatography (GPC, model: Alliance 2695, manufactured by Waters Corporation, column: Shodex GPC KF-804L × 2 (in series), manufactured by Resonac Corporation, guard column: KF-G, manufactured by Resonac Corporation). According to the GPC analysis, it was confirmed that the obtained XUA008 was a polymer containing a γ-methacryloxypropylhepta(trifluoropropyl)-T8-silsesquioxane unit and having an acryloyl group in a side chain.

### [Production of Dimer Acid Di(meth)acrylate-based Resin]

Dimer diol di(meth)acrylate derived from dimer diol being a derivative of dimer acid was produced by the following method. Dimer diol (manufactured by Croda Japan K.K.; trade name: Pripol 2033, 284.4 g, 500 mmol) was dissolved in dry acetone (450 ml) in a 1 L three-necked flask equipped with a mechanical stirrer and a dropping funnel under a nitrogen atmosphere. Triethylamine (101.2 g, 1 mol) was added to the solution, and the solution was cooled to 4 °C in an ice bath. Acryloyl chloride (90.5 g, 1 mol) solvated in dry acetone (100 ml) was placed in the dropping funnel, and was added dropwise to the stirred reaction solution over a period of 60 minutes while an internal temperature T was maintained at T < 10 °C. The solution was further stirred on ice for 2 hours, after which the temperature was returned to room temperature and the mixture was stirred for 4 hours. Most of the solvent was removed using an evaporator, and the remaining residue was solvated in CH₂Cl₂ (1 L). The solution was further washed with a 5 wt% HCl aqueous solution (800 ml) and H₂O (1200 ml). The isolated organic material was dried over anhydrous MgSO₄, filtered, and the solvent was removed using an evaporator to obtain dimer diol di(meth)acrylate (DDDA).

### [Preparation of Coating Agent]

Materials were mixed and stirred in the compositions shown in Table 1 to prepare the coating agents of the present invention and comparative coating agents. The materials used are shown below.

### Dimer acid di(meth)acrylate-based resin

- DDDA: dimer diol di(meth)acrylate produced by the method described above.

### Polyfunctional (meth)acrylate-based compounds

- M309: manufactured by Toagosei Co., Ltd.; trade name: Aronix (registered trademark) M309; trimethylolpropane triacrylate.

### Photopolymerization initiator

- Photopolymerization initiator: photopolymerization initiator manufactured by BASF; trade name: Irgacure (registered trademark) 127; 2-hydroxy-1-(4-((4-(2-hydroxy-2-methylpropanoyl)phenyl)methyl)phenyl)-2-methylpropan-1-one. Fluorine compound
- XUA008: XUA008 produced by the method described above. A polymer containing a γ-methacryloxypropylhepta(trifluoropropyl)-T8-silsesquioxane unit and having an acryloyl group in a side chain. The parts by weight of XUA008 in Table 1 are the parts by weight of the solid content of a 30 wt% solution of XUA008.

### Reactive silicone compound

- FM-7711: manufactured by JNC Corporation; trade name: Silaplane (registered trademark) FM-7711. A polydimethylsiloxane macromonomer having a methacryloyl group at both terminals with a number average molecular weight Mn of 1,000.

### Photostabilizer (1)

- TINUVIN (registered trademark) 292: photostabilizer manufactured by BASF; trade name: TINUVIN 292 (compound name: mixture of approximately 75% by weight of bis(1,2,2,6,6-pentamethyl-4-piperidinyl)sebacate and approximately 25% by weight of methyl(1,2,2,6,6-pentamethyl-4-piperidinyl)sebacate).

### Ultraviolet absorber

- TINUVIN (registered trademark) 479: trade name of ultraviolet absorber manufactured by BASF; a hydroxyphenyltriazine-based ultraviolet absorber.
- TINUVIN (registered trademark) 384-2: trade name of ultraviolet absorber manufactured by BASF; a benzotriazole-based ultraviolet absorber.
- TINUVIN (registered trademark) 400: trade name of ultraviolet absorber manufactured by BASF; a hydroxyphenyltriazine-based ultraviolet absorber.

### Diluent (solvent)

- Diluent (solvent): methyl isobutyl ketone.

### Other components

- TINUVIN (registered trademark) 770: trade name of photostabilizer manufactured by BASF; bis(2,2,6,6-tetramethyl-4-piperidinyl) sebacate.

### [Preparation of Coating Agent A0]

As the dimer acid di(meth)acrylate-based resin, 27.7 parts by weight of the "dimer diol di(meth)acrylate" synthesized above were used; as the polyfunctional (meth)acrylate-based compounds being trifunctional acrylate-based compounds, 64.8 parts by weight of an ultraviolet curable resin manufactured by Toagosei Co., Ltd., trade name "Aronix M309," were used; as the photopolymerization initiator, 6.9 parts by weight of a photopolymerization initiator manufactured by BASF, trade name "Irgacure 127," were used; and further, as the fluorine compound, 0.5 part by weight of XUA008 (as the weight of solid content at an effective concentration of 30.0% by weight) obtained by the method described above and being a fluorosilsesquioxane polymer, and as the reactive silicone compound, 0.1 part by weight of Silaplane FM-7711 (trade name, manufactured by JNC Corporation), were used. Here, furthermore, with the total weight of the curable component, the fluorine compound, and the z silicone compound set to 100 parts by weight, 2.0 parts by weight of a photostabilizer manufactured by BASF, trade name "TINUVIN 292," as the photostabilizer (1), 2.0 parts by weight of an ultraviolet absorber manufactured by BASF, trade name "TINUVIN 384-2," and 2.0 parts by weight of an ultraviolet absorber manufactured by BASF, trade name "TINUVIN 400," as the ultraviolet absorber, and 30 parts by weight of methyl isobutyl ketone as the diluent (solvent) were added.

Thus, the coating agent A0 shown in Table 1 was obtained.

### [Preparation of Coating Agent B0]

As the dimer acid di(meth)acrylate-based resin, 27.8 parts by weight of the "dimer diol di(meth)acrylate" synthesized above were used; as the polyfunctional (meth)acrylate-based compounds being trifunctional acrylate-based compounds, 65.1 parts by weight of an ultraviolet curable resin manufactured by Toagosei Co., Ltd., trade name "Aronix M309," were used; as the photopolymerization initiator, 7.0 parts by weight of a photopolymerization initiator manufactured by BASF, trade name "Irgacure 127," were used; and as the reactive silicone compound, 0.1 part by weight of Silaplane FM-7711 (trade name, manufactured by JNC Corporation) was used. Here, furthermore, with the total weight of the curable component, the fluorine compound, and the reactive silicone compound set to 100 parts by weight, 5.0 parts by weight of a photostabilizer manufactured by BASF, trade name "TINUVIN 292," as the photostabilizer (1), 5.0 parts by weight of an ultraviolet absorber manufactured by BASF, trade name "TINUVIN 384-2," and 5.0 parts by weight of an ultraviolet absorber manufactured by BASF, trade name "TINUVIN 400," as the ultraviolet absorber, and 30 parts by weight of methyl isobutyl ketone as the diluent (solvent) were added.

Thus, the coating agent B0 shown in Table 1 was obtained.

### [Preparation of Coating Agent C0]

As the dimer acid di(meth)acrylate-based resin, 46.2 parts by weight of the "dimer diol di(meth)acrylate" synthesized above were used; as the polyfunctional (meth)acrylate-based compounds being trifunctional acrylate-based compounds, 46.3 parts by weight of an ultraviolet curable resin manufactured by Toagosei Co., Ltd., trade name "Aronix M309," were used; as the photopolymerization initiator, 6.9 parts by weight of a photopolymerization initiator manufactured by BASF, trade name "Irgacure 127," were used; and further, as the fluorine compound, 0.5 part by weight of XUA008 (as the weight of solid content at an effective concentration of 30.0% by weight) obtained by the method described above and being a fluorosilsesquioxane polymer, and as the reactive silicone compound, 0.1 part by weight of Silaplane FM-7711 (trade name, manufactured by JNC Corporation), were used. Here, furthermore, with the total weight of the curable component, the fluorine compound, and the reactive silicone compound set to 100 parts by weight, 2.5 parts by weight of a photostabilizer manufactured by BASF, trade name "TINUVIN 292," as the photostabilizer (1), 2.5 parts by weight of an ultraviolet absorber manufactured by BASF, trade name "TINUVIN 384-2," and 2.5 parts by weight of an ultraviolet absorber manufactured by BASF, trade name "TINUVIN 400," as the ultraviolet absorber, and 30 parts by weight of methyl isobutyl ketone as the diluent (solvent) were added.

Thus, the coating agent C0 shown in Table 1 was obtained.

### [Preparation of Coating Agent D0]

As the dimer acid di(meth)acrylate-based resin, 9.2 parts by weight of the "dimer diol di(meth)acrylate" synthesized above were used; as the polyfunctional (meth)acrylate-based compounds being trifunctional acrylate-based compounds, 83.3 parts by weight of an ultraviolet curable resin (trifunctional acrylate) manufactured by Toagosei Co., Ltd., trade name "Aronix M309," were used; as the photopolymerization initiator, 6.9 parts by weight of a photopolymerization initiator manufactured by BASF, trade name "Irgacure 127," were used; and further, as the fluorine compound, 0.5 part by weight of XUA008 (as the weight of solid content at an effective concentration of 30.0% by weight) obtained by the method described above and being a fluorosilsesquioxane polymer, and as the reactive silicone compound, 0.1 part by weight of Silaplane FM-7711 (trade name, manufactured by JNC Corporation), were used. Here, furthermore, with the total weight of the curable component, the fluorine compound, and the reactive silicone compound set to 100 parts by weight, 2.0 parts by weight of a photostabilizer manufactured by BASF, trade name "TINUVIN 292," as the photostabilizer (1), 2.0 parts by weight of an ultraviolet absorber manufactured by BASF, trade name "TINUVIN 384-2," and 2.0 parts by weight of an ultraviolet absorber manufactured by BASF, trade name "TINUVIN 400," as the ultraviolet absorber, and 30 parts by weight of methyl isobutyl ketone as the diluent (solvent) were added.

Thus, the coating agent D0 shown in Table 1 was obtained.

### [Preparation of Coating Agent E0]

As the dimer acid di(meth)acrylate-based resin, 27.8 parts by weight of the "dimer diol di(meth)acrylate" synthesized above were used; as the polyfunctional (meth)acrylate-based compounds being trifunctional acrylate-based compounds, 65.1 parts by weight of an ultraviolet curable resin manufactured by Toagosei Co., Ltd., trade name "Aronix M309," were used; as the photopolymerization initiator, 7.0 parts by weight of a photopolymerization initiator manufactured by BASF, trade name "Irgacure 127," were used; and further, as the reactive silicone compound, 0.1 part by weight of Silaplane FM-7711 (trade name, manufactured by JNC Corporation) was used. Here, furthermore, with the total weight of the curable component, the fluorine compound, and the reactive silicone compound set to 100 parts by weight, 2.0 parts by weight of a photostabilizer manufactured by BASF, trade name "TINUVIN 292," as the photostabilizer (1), 2.0 parts by weight of an ultraviolet absorber manufactured by BASF, trade name "TINUVIN 384-2," and 2.0 parts by weight of an ultraviolet absorber manufactured by BASF, trade name "TINUVIN 400," as the ultraviolet absorber, and 30 parts by weight of methyl isobutyl ketone as the diluent (solvent) were added.

Thus, the coating agent E0 shown in Table 1 was obtained.

### [Preparation of Coating Agent F0]

As the dimer acid di(meth)acrylate-based resin, 27.8 parts by weight of the "dimer diol di(meth)acrylate" synthesized above were used; as the polyfunctional (meth)acrylate-based compounds being trifunctional acrylate-based compounds, 64.8 parts by weight of an ultraviolet curable resin manufactured by Toagosei Co., Ltd., trade name "Aronix M309," were used; as the photopolymerization initiator, 7.0 parts by weight of a photopolymerization initiator manufactured by BASF, trade name "Irgacure 127," were used; and further, as the reactive silicone compound, 0.1 part by weight of Silaplane FM-7711 (trade name, manufactured by JNC Corporation) was used. Here, furthermore, with the total weight of the curable component, the fluorine compound, and the reactive silicone compound set to 100 parts by weight, 1.5 parts by weight of a photostabilizer manufactured by BASF, trade name "TINUVIN 292," as the photostabilizer (1), 1.5 parts by weight of an ultraviolet absorber manufactured by BASF, trade name "TINUVIN 479," and 1.5 parts by weight of an ultraviolet absorber manufactured by BASF, trade name "TINUVIN 400," as the ultraviolet absorber, and 30 parts by weight of methyl isobutyl ketone as the diluent (solvent) were added.

Thus, the coating agent F0 shown in Table 1 was obtained.

### [Preparation of Coating Agent G0]

As the dimer acid di(meth)acrylate-based resin, 27.7 parts by weight of the "dimer diol di(meth)acrylate" synthesized above were used; as the polyfunctional (meth)acrylate-based compounds being trifunctional acrylate-based compounds, 64.8 parts by weight of an ultraviolet curable resin manufactured by Toagosei Co., Ltd., trade name "Aronix M309," were used; as the photopolymerization initiator, 6.9 parts by weight of a photopolymerization initiator manufactured by BASF, trade name "Irgacure 127," were used; and further, as the fluorine compound, 0.5 part by weight of XUA008 (as the weight of solid content at an effective concentration of 30.0% by weight) obtained by the method described above and being a fluorosilsesquioxane polymer, and as the reactive silicone compound, 0.1 part by weight of Silaplane FM-7711 (trade name, manufactured by JNC Corporation), were used. Here, furthermore, with the total weight of the curable component, the fluorine compound, and the reactive silicone compound set to 100 parts by weight, 1.5 parts by weight of a photostabilizer manufactured by BASF, trade name "TINUVIN 292," as the photostabilizer (1), 1.5 parts by weight of an ultraviolet absorber manufactured by BASF, trade name "TINUVIN 384-2," and 1.5 parts by weight of an ultraviolet absorber manufactured by BASF, trade name "TINUVIN 400," as the ultraviolet absorber, and 30 parts by weight of methyl isobutyl ketone as the diluent (solvent) were added.

Thus, the coating agent G0 shown in Table 1 was obtained.

### [Preparation of Coating Agent H0]

As the dimer acid di(meth)acrylate-based resin, 27.7 parts by weight of the "dimer diol di(meth)acrylate" synthesized above were used; as the polyfunctional (meth)acrylate-based compounds being trifunctional acrylate-based compounds, 64.8 parts by weight of an ultraviolet curable resin manufactured by Toagosei Co., Ltd., trade name "Aronix M309," were used; as the photopolymerization initiator, 6.9 parts by weight of a photopolymerization initiator manufactured by BASF, trade name "Irgacure 127," were used; and further, as the fluorine compound, 0.5 part by weight of XUA008 (as the weight of solid content at an effective concentration of 30.0% by weight) obtained by the method described above and being a fluorosilsesquioxane polymer, and as the reactive silicone compound, 0.1 part by weight of Silaplane FM-7711 (trade name, manufactured by JNC Corporation), were used. Here, furthermore, with the total weight of the curable component, the fluorine compound, and the reactive silicone compound set to 100 parts by weight, 2.0 parts by weight of a photostabilizer manufactured by BASF, trade name "TINUVIN 770," as the photostabilizer, 2.0 parts by weight of an ultraviolet absorber manufactured by BASF, trade name "TINUVIN 384-2," and 2.0 parts by weight of an ultraviolet absorber manufactured by BASF, trade name "TINUVIN 400," as the ultraviolet absorber, and 30 parts by weight of methyl isobutyl ketone as the diluent (solvent) were added.

Thus, the coating agent H0 shown in Table 1 was obtained.

### [Preparation of Coating Agent I0]

As the dimer acid di(meth)acrylate-based resin, 27.7 parts by weight of the "dimer diol di(meth)acrylate" synthesized above were used; as the polyfunctional (meth)acrylate-based compounds being trifunctional acrylate-based compounds, 64.8 parts by weight of an ultraviolet curable resin manufactured by Toagosei Co., Ltd., trade name "Aronix M309," were used; as the photopolymerization initiator, 6.9 parts by weight of a photopolymerization initiator manufactured by BASF, trade name "Irgacure 127," were used; and further, as the fluorine compound, 0.5 part by weight of XUA008 (as the weight of solid content at an effective concentration of 30.0% by weight) obtained by the method described above and being a fluorosilsesquioxane polymer, and as the reactive silicone compound, 0.1 part by weight of Silaplane FM-7711 (trade name, manufactured by JNC Corporation), were used. Here, furthermore, with the total weight of the curable component, the fluorine compound, and the reactive silicone compound set to 100 parts by weight, 2.0 parts by weight of a photostabilizer manufactured by BASF, trade name "TINUVIN 770," as the photostabilizer, 2.0 parts by weight of an ultraviolet absorber manufactured by BASF, trade name "TINUVIN 479," and 2.0 parts by weight of an ultraviolet absorber manufactured by BASF, trade name "TINUVIN 400," as the ultraviolet absorber, and 30 parts by weight of methyl isobutyl ketone as the diluent (solvent) were added.

Thus, the coating agent I0 shown in Table 1 was obtained.

### [Preparation of Coating Agent J0]

As the dimer acid di(meth)acrylate-based resin, 27.7 parts by weight of the "dimer diol di(meth)acrylate" synthesized above were used; as the polyfunctional (meth)acrylate-based compounds being trifunctional acrylate-based compounds, 64.8 parts by weight of an ultraviolet curable resin manufactured by Toagosei Co., Ltd., trade name "Aronix M309," were used; as the photopolymerization initiator, 6.9 parts by weight of a photopolymerization initiator manufactured by BASF, trade name "Irgacure 127," were used; and further, as the fluorine compound, 0.5 part by weight of XUA008 (as the weight of solid content at an effective concentration of 30.0% by weight) obtained by the method described above and being a fluorosilsesquioxane polymer, and as the reactive silicone compound, 0.1 part by weight of Silaplane FM-7711 (trade name, manufactured by JNC Corporation), were used. Here, furthermore, with the total weight of the curable component, the fluorine compound, and the reactive silicone compound set to 100 parts by weight, 5.0 parts by weight of a photostabilizer manufactured by BASF, trade name "TINUVIN 770," as the photostabilizer, 5.0 parts by weight of an ultraviolet absorber manufactured by BASF, trade name "TINUVIN 384-2," and 5.0 parts by weight of an ultraviolet absorber manufactured by BASF, trade name "TINUVIN 400," as the ultraviolet absorber, and 30 parts by weight of methyl isobutyl ketone as the diluent (solvent) were added.

Thus, the coating agent J0 shown in Table 1 was obtained.

### [Preparation of Coating Agent K0]

As the dimer acid di(meth)acrylate-based resin, 27.7 parts by weight of the "dimer diol di(meth)acrylate" synthesized above were used; as the polyfunctional (meth)acrylate-based compounds being trifunctional acrylate-based compounds, 64.8 parts by weight of an ultraviolet curable resin manufactured by Toagosei Co., Ltd., trade name "Aronix M309," were used; as the photopolymerization initiator, 6.9 parts by weight of a photopolymerization initiator manufactured by BASF, trade name "Irgacure 127," were used; and further, as the fluorine compound, 0.5 part by weight of XUA008 (as the weight of solid content at an effective concentration of 30.0% by weight) obtained by the method described above and being a fluorosilsesquioxane polymer, and as the reactive silicone compound, 0.1 part by weight of Silaplane FM-7711 (trade name, manufactured by JNC Corporation), were used. Here, furthermore, with the total weight of the curable component, the fluorine compound, and the reactive silicone compound set to 100 parts by weight, 1.5 parts by weight of a photostabilizer manufactured by BASF, trade name "TINUVIN 770," as the photostabilizer, 1.5 parts by weight of an ultraviolet absorber manufactured by BASF, trade name "TINUVIN 479," and 1.5 parts by weight of an ultraviolet absorber manufactured by BASF, trade name "TINUVIN 400," as the ultraviolet absorber, and 30 parts by weight of methyl isobutyl ketone as the diluent (solvent) were added.

Thus, the coating agent K0 shown in Table 1 was obtained.

### [Preparation of Coating Agent L0]

As the dimer acid di(meth)acrylate-based resin, 27.7 parts by weight of the "dimer diol di(meth)acrylate" synthesized above were used; as the polyfunctional (meth)acrylate-based compounds being trifunctional acrylate-based compounds, 64.8 parts by weight of an ultraviolet curable resin manufactured by Toagosei Co., Ltd., trade name "Aronix M309," were used; as the photopolymerization initiator, 6.9 parts by weight of a photopolymerization initiator manufactured by BASF, trade name "Irgacure 127," were used; and further, as the fluorine compound, 0.5 part by weight of XUA008 (as the weight of solid content at an effective concentration of 30.0% by weight) obtained by the method described above and being a fluorosilsesquioxane polymer, and as the reactive silicone compound, 0.1 part by weight of Silaplane FM-7711 (trade name, manufactured by JNC Corporation), were used. Here, furthermore, with the total weight of the curable component, the fluorine compound, and the reactive silicone compound set to 100 parts by weight, 30 parts by weight of methyl isobutyl ketone as the diluent (solvent) were added.

Thus, the coating agent K0 shown in Table 1 was obtained.

### [Examples 1 to 7, Comparative Examples 1 to 5]

### [Preparation of Laminate]

A commercially available acrylic pressure-sensitive adhesive (trade name: S8721, manufactured by Avery Dennison) was applied by a die coating method to one surface of a substrate layer (thermoplastic polyurethane film manufactured by Argotec, trade name "ARGOGUARD 49510"), and dried at 70 °C for 3 minutes. Thus, an adhesive layer having a thickness of 40 µm was formed on one surface of the substrate layer.

Next, an open surface of the adhesive layer and a 75 µm-thick polyethylene terephthalate release film (release liner) subjected to release treatment with silicone resin were crimped using a rubber roller, and cured at 45 °C for 1 day. Thus, laminates A, B, C, D, E, F, G, H, I, J, K, and L were obtained in which the substrate layer, the adhesive layer, and the release film were in contact in this order.

The photopolymerizable coating agents A0, B0, C0, D0, E0, F0, G0, H0, I0, J0, K0, and L0 were applied to the open surface of the substrate layer using a wire bar coater No. 12 manufactured by R.D.S. Webster, and dried at 80 °C for 3 minutes. Thereafter, the coating agents were cured at an integrated light intensity of 500 mJ/cm² using a belt conveyor curing unit equipped with a fusion UV lamp (manufactured by Heraeus). Thus, a coating layer having a thickness of 0.5 to 5.0 µm was formed on the substrate layer, and laminates (Example 1, Example 2, Example 3, Example 4, Example 5, Example 6, Example 7, Comparative Example 1, Comparative Example 2, Comparative Example 3, Comparative Example 4, and Comparative Example 5) were obtained in which the coating layer, the substrate layer, the adhesive layer, and the release film layer were in contact in this order.

### [Weather Resistance Test of Laminate]

Using the laminates, an accelerated weather resistance test was conducted using an accelerated weathering tester "Super Xenon Weather Meter SX75Z" manufactured by Suga Test Instruments Co., Ltd. (lamp: 7.5 kW xenon lamp, irradiance: 180 W/m², black panel temperature: 63 °C, test conditions: UV irradiation + water spray (18 minutes) → irradiation only (102 minutes), repeated in 1 cycle of 2 hours). The total light transmittance (%), haze, and color tone before the accelerated weather resistance test and after 2,000 hours of the accelerated weather resistance test were measured.

### [Evaluation of Laminate]

The obtained laminates before and after the accelerated weather resistance test were evaluated from the following viewpoints. The results are shown in Table 1.

### 1) Total Light Transmittance (%)

As an indicator of transparency of the laminate, the total light transmittance was measured using a haze meter (trade name: NDH-5000SP, manufactured by Nippon Denshoku Industries Co., Ltd.) in accordance with JIS K 7361-1. The release film of the laminate was peeled before the accelerated weather resistance test and after 2,000 hours of the accelerated weather resistance test, and the measurement was performed with the target laminate attached to a polycarbonate resin plate (trade name: Panlite PC-1151, manufactured by Teijin Limited, thickness: 2.0 mm) via the adhesive layer.

### 2) Haze

As an indicator of transparency of the laminate, the haze was measured using a haze meter (trade name: NDH-5000SP, manufactured by Nippon Denshoku Industries Co., Ltd.) in accordance with JIS K 7361-1. The release film of the laminate was peeled before the accelerated weather resistance test and after 2,000 hours of the accelerated weather resistance test, and the measurement was performed with the target laminate attached to a polycarbonate resin plate (trade name: Panlite PC-1151, manufactured by Teijin Limited, thickness: 2.0 mm) via the adhesive layer.

### 3) Color Tone

As an indicator of color tone of the laminate, the b* value (transmission SCI) was measured using a spectrophotometer/colorimeter (trade name: SD 7000, manufactured by Nippon Denshoku Industries Co., Ltd.) in accordance with JIS Z 8729. The release film of the laminate was peeled before the accelerated weather resistance test and after 2,000 hours of the accelerated weather resistance test, and the measurement was performed with the target laminate attached to a polycarbonate resin plate (trade name: Panlite PC-1151, manufactured by Teijin Limited, thickness: 2.0 mm) via the adhesive layer.

**[Table 1]**

| | | | Example | | | | | | | Comparative Example | | | | |
|---|---|---|---|---|---|---|---|---|---|---|---|---|---|---|
| | | | 1 | 2 | 3 | 4 | 5 | 6 | 7 | 1 | 2 | 3 | 4 | 5 |
| Laminate | | | A | B | C | D | E | F | G | H | I | J | K | L |
| Coating agent | | | A0 | B0 | C0 | D0 | E0 | F0 | G0 | H0 | I0 | J0 | K0 | L0 |
| Coating agent resin composition ratio (parts by weight) 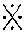 | DDDA | | 27.7 | 27.8 | 46.2 | 9.2 | 27.8 | 27.8 | 27.7 | 27.7 | 27.7 | 27.7 | 27.7 | 27.7 |
| | M309 | | 64.8 | 65.1 | 46.3 | 83.3 | 65.1 | 65.1 | 64.8 | 64.8 | 64.8 | 64.8 | 64.8 | 64.8 |
| | XUA008 | | 0.5 | | 0.5 | 0.5 | | | 0.5 | 0.5 | 0.5 | 0.5 | 0.5 | 0.5 |
| | FM-7711 | | 0.1 | 0.1 | 0.1 | 0.1 | 0.1 | 0.1 | 0.1 | 0.1 | 0.1 | 0.1 | 0.1 | 0.1 |
| | Photopolymerization | | 6.9 | 7.0 | 6.9 | 6.9 | 7.0 | 7.0 | 6.9 | 6.9 | 6.9 | 6.9 | 6.9 | 6.9 |
| | | initiator | | | | | | | | | | | | |
| | | TINUVIN^{®} 292 | 2.0 | 5.0 | 2.5 | 2.0 | 2.0 | 1.5 | 1.5 | | | | | |
| | | TINUVIN^{®} 770 | | | | | | | | 2.0 | 2.0 | 5.0 | 1.5 | |
| | | TINUVIN^{®} 479 | | | | | | 1.5 | | | 2.0 | | 1.5 | |
| | | TINUVIN^{®} 384-2 | 2.0 | 5.0 | 2.5 | 2.0 | 2.0 | | 1.5 | 2.0 | | 5.0 | | |
| | | TINUVIN^{®} 400 | 2.0 | 5.0 | 2.5 | 2.0 | 2.0 | 1.5 | 1.5 | 2.0 | 2.0 | 5.0 | 1.5 | |
| | | Diluent (solvent) | 30.0 | 30.0 | 30.0 | 30.0 | 30.0 | 30.0 | 30.0 | 30.0 | 30.0 | 30.0 | 30.0 | 30.0 |
| Evaluation | Weather Resistance test | | | | | | | | | | | | | |
| | 0 hr | Total light transmittance (%) | 91 | 91 | 91 | 91 | 91 | 91 | 91 | 91 | 91 | 91 | 91 | 91 |
| | | Haze (%) | 1.05 | 1.02 | 0.91 | 0.99 | 0.98 | 0.78 | 0.89 | 1.10 | 1.20 | 0.99 | 0.91 | 0.86 |
| | | Color tone (b*value) | 0.3 | 0.3 | 0.3 | 0.3 | 0.3 | 0.3 | 0.3 | 0.3 | 0.3 | 0.3 | 0.4 | 0.3 |
| | 2,000 hr | Total light transmittance (%) | 91 | 92 | 91 | 91 | 91 | 92 | 91 | 92 | 91 | 91 | 92 | 91 |
| | | Haze (%) | 1.00 | 0.82 | 0.89 | 0.94 | 0.82 | 0.89 | 0.78 | 1.22 | 1.20 | 1.38 | 1.26 | 1.48 |
| | | Color tone (b*value) | 0.4 | 0.5 | 0.6 | 0.5 | 0.4 | 0.6 | 0.7 | 0.7 | 0.9 | 1.0 | 0.9 | 1.1 |

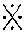 Table 1 shows the proportions (parts by weight) of each of the photostabilizer, ultraviolet absorber, and diluent (solvent) contained relative to 100 parts by weight of the total amount of curable components, fluorine compounds, and reactive silicone compounds.

As shown in Table 1, in the laminates prepared in Examples 1 to 7, since TINUVIN 292 was employed as the photostabilizer represented by formula (1), only a small difference is observed in total light transmittance (%), haze, and color tone before and after the accelerated weather resistance test, and that is, excellent weather resistance can be achieved.

On the other hand, as shown in Table 1, in the laminates prepared in Comparative Examples 1 to 5, since the photostabilizer represented by formula (1) was not employed, a large difference is observed in haze and color tone before and after the accelerated weather resistance test.

### Industrial Applicability

The laminate of the present invention has excellent weather resistance, is thus applicable for outdoor use, and can also be used in vehicles such as automobiles, motorcycles, and trains, as well as ships, windows, digital signage, outdoor touch panels, and the like. The laminate is also applicable for indoor use and can also be used for protection of floorboards, kitchens, bathroom walls, packaging, office supplies, and the like. In addition, the laminate smooths a surface of a protected article, thereby improving design properties.

### Description of Reference Numerals

- 10: laminate

- 11: substrate layer
- 12: coating layer
- 13: adhesive layer
- 14: release film
- s1: surface
- ss: fluorine compound, reactive silicone compound

## Claims

1. A coating agent, containing a dimer acid di(meth)acrylate-based resin, polyfunctional (meth)acrylate-based compounds, a photopolymerization initiator, and a photostabilizer represented by formula (1). 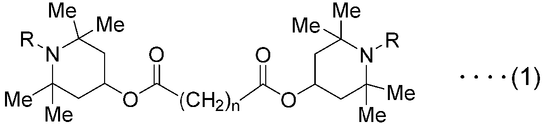 (wherein in formula (1), n is an integer of 4 to 12, R is each independently an alkyl having 1 to 5 carbon atoms or an alkoxy having 4 to 10 carbon atoms, and Me is methyl.

2. The coating agent according to claim 1, further containing an ultraviolet absorber.

3. The coating agent according to claim 1, wherein the polyfunctional (meth)acrylate-based compounds are trifunctional acrylate-based compounds.

4. A laminate, comprising a coating layer and a substrate layer, the coating layer being composed of a cured product of a coating agent formed on a substrate layer using the coating agent according to any one of claims 1 to 3.

5. A laminate, comprising a coating layer and a substrate layer, the coating layer being composed of a cured product of a coating agent formed on a substrate layer using the coating agent according to any one of claims 1 to 3, the substrate layer being formed using thermoplastic polyurethane.

6. A laminate, comprising a coating layer, a substrate layer, and an adhesive layer, the coating layer being composed of a cured product of a coating agent formed on a substrate layer using the coating agent according to any one of claims 1 to 3, the substrate layer being formed using thermoplastic polyurethane, the adhesive layer being formed using at least one resin selected from acrylic-based resin, urethane-based resin, rubber-based resin, and silicone-based resin on a surface side of the substrate layer opposite to a surface side on which the coating layer is formed.

7. The laminate according to claim 4, wherein the coating agent further contains at least one reactive silicone compound selected from siloxanes having an acryloyl group at both terminals or one terminal.

8. The laminate according to claim 4, wherein the coating agent further contains at least one fluorine compound selected from a group consisting of a fluorosilsesquioxane monomer and a fluorosilsesquioxane polymer.

9. The laminate according to claim 8, wherein the fluorosilsesquioxane polymer is an addition polymer of a fluorosilsesquioxane monomer having at least one addition polymerizable functional group, or an addition copolymer of a fluorosilsesquioxane monomer having one addition polymerizable functional group and an addition polymerizable monomer.

10. An article, having the laminate according to claim 6 attached to a surface thereof by the adhesive layer.
